# EUROPEAN PATENT APPLICATION

(11) **EP 4 455 893 A1**
(43) Date of publication of application: **30.10.2024**
(21) Application number: 24166807.8
(22) Date of filing: 27.03.2024
(51) Int. Cl.: G06F 12/0868

(54) **SYSTEMS, METHODS, AND APPARATUS FOR DEVICES WITH MEMORY AND STORAGE CONFIGURATIONS**

(30) Priority: 28.04.2023 US 202363462965 P; 30.01.2024 US 202418427816
(71) Applicant: Samsung Electronics Co., Ltd., Suwon-si, Gyeonggi-do 16677 (KR)
(72) Inventor: PITCHUMANI, Rekha, San Jose, CA, 95134 (US); KI, Yang Seok, San Jose, CA, 95134 (US); LI, Zongwang, San Jose, CA, 95134 (US); NGUYEN, Marie Mai, San Jose, CA, 95134 (US); ZHANG, Tong, San Jose, CA, 95134 (US)
(74) Representative: Kuhnen & Wacker Patent- und Rechtsanwaltsbüro PartG mbB

(57) **Abstract**

A device may include cache media, storage media, a communication interface configured to communicate with the cache media and the storage media, and at least one control circuit to configure a portion of the storage media as visible memory, and configure a portion of the cache media as a cache for the portion of the storage media. The portion of the storage media may be a first portion of the storage media, and the at least one control circuit may be to configure a second portion of the storage media to persist the portion of the cache media. The portion of the storage media may be a first portion of the storage media, and the at least one control circuit may be to configure a second portion of the storage media as visible storage.

## Description

### TECHNICAL FIELD

This disclosure relates generally to devices with memory and storage, and more specifically to systems, methods, and apparatus for devices with memory and storage configurations.

### BACKGROUND

A storage device may include one or more storage media configured to store data received at the storage device. A storage device may communicate with a host, a storage system, and/or the like using a storage interface, a storage protocol, and/or the like. An application or other user may access storage media at a storage device using read and/or write commands.

The above information disclosed in this Background section is only for enhancement of understanding of the background of the inventive principles and therefore it may contain information that does not constitute prior art.

### SUMMARY

A device may include a cache media, a storage media, a communication interface, and at least one control circuit configured to receive, using the communication interface, a first memory access request to access a portion of the storage media, receive, using the communication interface, a second memory access request to access the portion of the storage media, access, based on the first memory access request, the portion of the storage media, and access, based on the second memory access request, a portion of the cache media. The portion of the cache media may include a first cache, and the at least one control circuit may be configured to access, based on the first memory access request, the portion of the storage media by reading data from the portion of the storage media, storing the data in a second cache, and loading at least a portion of the data from the second cache. The at least one control circuit may be configured to write at least a portion of the portion of the cache media to the portion of the storage media. The portion of the storage media may be a first portion of the storage media, and the at least one control circuit may be configured to receive, using the communication interface, a storage access request to access a second portion of the storage media, and access, based on the storage access request, the second portion of the storage media. The at least one control circuit may be configured to receive the first memory access request using a first protocol, and receive the storage access request using a second protocol. The at least one control circuit may be configured to operate the portion of the cache media and the first portion of the storage media as a first logical device, and operate the second portion of the storage media as a second logical device. The at least one control circuit may be configured to receive, using the communication interface, a storage access request to access the portion of the storage media, and access, based on the storage access request, the portion of the storage media. The at least one control circuit may be configured to receive the first memory access request using a first protocol, and receive the storage access request using a second protocol. The first protocol may include a memory access protocol, and the second protocol may include a storage access protocol. The at least one control circuit may be configured to perform a coherency operation associated with the portion of the storage media. The portion of the storage media may be a first portion of the storage media, and the at least one control circuit may be configured to write at least a portion of the portion of the cache media to a second portion of the storage media. The at least one control circuit may include work logic configured to receive a command, and perform, based on the command, a data movement operation or an operation associated with the portion of the cache media.

A device may include a memory media, a storage media, a communication interface, and at least one control circuit configured to receive, using the communication interface, a memory access request to access a portion of the memory media, access, based on the memory access request, the portion of the storage media, and write the portion of the memory media to a portion of the storage media. The portion of the storage media may be a first portion of the storage media, and the at least one control circuit may be configured to receive, using the communication interface, a storage access request to access a second portion of the storage media, and access, based on the storage access request, the second portion of the storage media. The at least one control circuit may be configured to operate the portion of the memory media and the first portion of the storage media as a first logical device, and operate the second portion of the storage media as a second logical device. The portion of the memory media may be a first portion of the memory media, and the at least one control circuit may be configured to access, based on the storage access request, a second portion of the memory media.

A device may include media comprising cache media and storage media, a communication interface, and at least one control circuit configured to receive, using the communication interface, a first memory access request, access, based on the first memory access request, a first portion of the media, receive, using the communication interface, a first storage access request, access, based on the first storage access request, a second portion of the media, receive, using the communication interface, a second memory access request, receive, using the communication interface, a second storage access request, access, based on the second memory access request, a third portion of the media, and access, based on the second storage access request, the third portion of the media. The first portion of the media may include a portion of the cache media, and the at least one control circuit may be configured to write data from the portion of the cache media to a portion of the storage media. The at least one control circuit may be configured to map the first portion of the media to the second portion of the media. The at least one control circuit may be configured to access, based on the first storage access request, a portion of the cache media.

### BRIEF DESCRIPTION OF THE DRAWINGS

The figures are not necessarily drawn to scale and elements of similar structures or functions may generally be represented by like reference numerals or portions thereof for illustrative purposes throughout the figures. The figures are only intended to facilitate the description of the various embodiments described herein. The figures do not describe every aspect of the teachings disclosed herein and do not limit the scope of the claims. To prevent the drawings from becoming obscured, not all of the components, connections, and the like may be shown, and not all of the components may have reference numbers. However, patterns of component configurations may be readily apparent from the drawings. The accompanying drawings, together with the specification, illustrate example embodiments of the present disclosure, and, together with the description, serve to explain the principles of the present disclosure.
Fig. 1 illustrates an embodiment of a device having memory and storage media in accordance with example embodiments of the disclosure.
Fig. 2 illustrates another embodiment of a device having memory and storage media in accordance with example embodiments of the disclosure.
Fig. 3 illustrates a first example embodiment of a scheme for configuring and/or operating a device having memory media and storage media in accordance with example embodiments of the disclosure.
Fig. 4 illustrates a second example embodiment of a scheme for configuring and/or operating a device having memory media and storage media in accordance with example embodiments of the disclosure.
Fig. 5 illustrates a third example embodiment of a scheme for configuring and/or operating a device having memory media and storage media in accordance with example embodiments of the disclosure.
Fig. 6 illustrates a fourth example embodiment of a scheme for configuring and/or operating a device having memory media and storage media in accordance with example embodiments of the disclosure.
Fig. 7 illustrates a fifth example embodiment of a scheme for configuring and/or operating a device having memory media and storage media in accordance with example embodiments of the disclosure.
Fig. 8 illustrates a sixth example embodiment of a scheme for configuring and/or operating a device having memory media and storage media in accordance with example embodiments of the disclosure.
Fig. 9 illustrates a seventh example embodiment of a scheme for configuring and/or operating a device having memory media and storage media in accordance with example embodiments of the disclosure.
Fig. 10 illustrates an embodiment of a dual mode storage access scheme in accordance with example embodiments of the disclosure.
Fig. 11 illustrates another embodiment of a dual mode storage access scheme in accordance with example embodiments of the disclosure.
Fig. 12 illustrates an example embodiment of a host apparatus that may be used to implement host functionality in accordance with example embodiments of the disclosure.
Fig. 13 illustrates an example embodiment of a storage device that may be used to implement device functionality in accordance with example embodiments of the disclosure.
Fig. 14 illustrates a first example embodiment of a device configuration scheme in accordance with example embodiments of the disclosure.
Fig. 15 illustrates a second example embodiment of a device configuration scheme in accordance with example embodiments of the disclosure.
Fig. 16 illustrates an example embodiment of a device configuration scheme with hot plug functionality in accordance with example embodiments of the disclosure.
Fig. 17 illustrates an example embodiment of a device configuration scheme with hot unplug functionality in accordance with example embodiments of the disclosure.
Fig. 18 illustrates an example embodiment of a hot unplug method for a device in accordance with example embodiments of the disclosure.

### DETAILED DESCRIPTION

Computing systems may include memory media which may have relatively short access times, but relatively high costs and/or low capacities compared to storage media. To provide expanded memory capacity at relatively low cost, an operating system may implement memory using storage media. For example, an operating system may implement memory mapped files that may be located on storage devices but may appear as memory to an application or other user. Depending on the implementation details, however, memory mapped files may have relatively long access times and/or may involve operating system overhead.

A storage device in accordance with example embodiments of the disclosure may include storage media that may be accessed as memory. The storage device may also include memory media that may be configured as a cache for the storage media. In some embodiments, at least a portion of the storage media may be configured to appear as volatile memory. Thus, depending on the implementation details, some embodiments may present a relatively large storage media as a volatile memory space that may be mapped, for example, as system memory. Moreover, the memory media that may be configured as a cache for the storage media may reduce access times (e.g., latency) for the volatile memory space.

In some embodiments, at least a portion of the storage media may be configured to appear as persistent memory. Thus, depending on the implementation details, some embodiments may present a relatively large storage media as a persistent memory space. Moreover, the memory media that may be configured as a cache may be persisted (e.g., written), for example, to the storage media (e.g., based on a power loss event). Depending on the implementation details, the memory media that may be configured as a cache may reduce access times (e.g., latency) for the persistent memory space.

In some embodiments, at least a portion of the storage media may be configured to appear as either memory or storage. For example, a storage device may implement a first access method in which at least a portion of the storage media may be accessed as storage space. The storage device may also implement a second access method in which a portion (e.g., the same portion) of the storage media may be accessed as memory space. The storage device may also include memory media that may be configured as a cache for the storage media. If accessed as memory space, the storage media may be configured to appear as volatile and/or persistent memory. In some embodiments, the memory media that may be configured as a cache may be persisted, for example, to the storage media (e.g., based on a power loss event). Depending on the implementation details, an embodiment that may implement first and second access methods (which may be referred to as multi-mode or dual mode operation) may enable a user to create, manage, use, and/or the like, any storage-as-memory configuration.

Alternatively, or additionally, a storage device in accordance with example embodiments of the disclosure may include memory media (e.g., volatile memory media) that may be configured to appear as persistent memory. In some embodiments, the memory media may be persisted, for example, to storage media in the storage device (e.g., based on a power loss event). Thus, depending on the implementation details, some embodiments may present a relatively large amount of volatile memory as persistent memory space.

In some embodiments, a storage device may implement multiple memory and/or storage spaces (e.g., a memory space and a storage space) in the same device. In some embodiments, different spaces may be implemented as different logical devices. In a first example embodiment, a first portion of a storage media may be configured to appear as volatile memory in a first logical device. Also in the first example embodiment, a second portion of the storage media may be configured to appear as storage space in a second logical device. In a second example embodiment, a first portion of a storage media may be configured to appear as persistent memory in a first logical device. Also in the second example embodiment, a second portion of the storage media may be configured to appear as storage space in a second logical device.

In some embodiments, a storage device may enable a user to configure memory media and/or storage media to implement any of the configurations described herein, and/or other configurations. Such embodiments may be referred to as composable devices and/or may be characterized as having composable memory, storage, and/or storage-as-memory. In some embodiments, composable may refer to an aspect of a device, memory media, storage media, controller, and/or the like, that may be capable of being configured, e.g., by a user. For example, a storage device may enable a user to configure one or more portions of storage media as memory space (e.g., volatile and/or persistent), as storage space, or a combination thereof. As another example, a storage device may enable a user to configure one or more portions of memory media as a cache for storage media, as a volatile and/or persistent memory space, and/or the like, or a combination thereof. As a further example, a storage device may enable a user to configure one or more portions of storage media to be accessed as memory space or storage space, for example, using different access methods.

In some embodiments, a storage device may implement one or more commands for cache operations (e.g., prefetch, invalidate, write back, and/or the like), data movement (e.g., moving data between a host system memory and a memory space in the storage device), and/or the like. Depending on the implementation details, one or more commands implemented by the storage device may offload one or more operations (e.g., memory transfer operations) from a host or other user.

This disclosure encompasses numerous aspects relating to devices with memory and storage configurations. The aspects disclosed herein may have independent utility and may be embodied individually, and not every embodiment may utilize every aspect. Moreover, the aspects may also be embodied in various combinations, some of which may amplify some benefits of the individual aspects in a synergistic manner.

For purposes of illustration, some embodiments may be described in the context of some specific implementation details such as devices implemented as storage devices that may use specific interfaces, protocols, and/or the like. However, the aspects of the disclosure are not limited to these or any other implementation details.

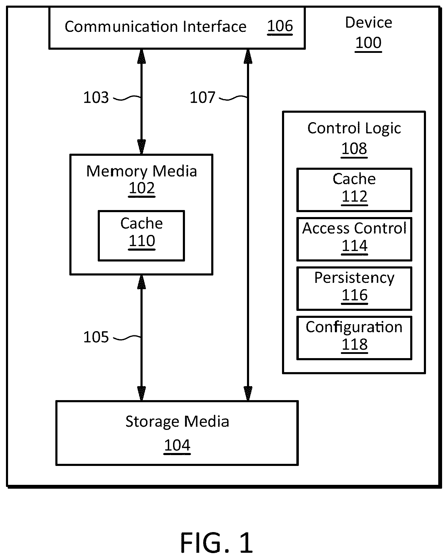

Fig. 1 illustrates an embodiment of a device having memory and storage media in accordance with example embodiments of the disclosure. The device 100 illustrated in Fig. 1 may include memory media 102, storage media 104, one or more communication interfaces 106, and/or control logic 108. The communication interface 106 may be configured to enable a user to access the memory media 102 as shown by arrow 103 and/or the storage media 104 as shown by arrow 107.

A portion (e.g., some or all) of the storage media 104 may be configured to appear as memory, for example, visible to (e.g., accessible by) a user through the communication interface 106. A portion of the memory media 102 may be configured as a cache 110 for a portion of the storage media 104.

The control logic 108 may implement, facilitate, control, and/or the like, one or more schemes for the configuration, operation, and/or the like, of one or more components of the device 100. The control logic 108 may include various types of logic such as cache logic 112, access control logic 114, persistency logic 116, configuration logic 118, and/or the like. Not every embodiment of control logic 108 may include each type of logic, and some embodiments may include additional types of logic not illustrated in Fig. 1. Any or all of the control logic 108 may be implemented as a single component (e.g., implemented with a single processor) or may be implemented with separate components, operations, and/or the like, for example, using separate processors, logic circuits, and/or the like).

In some embodiments, the control logic 108 may include cache logic 112 that may configure and/or control the operation of the cache portion 110 of the memory media 102. Examples of cache control operations may include implementing one or more cache mappings, data writing policies (e.g., write-through, write-back, and/or the like), cache replacement policies, and/or the like.

In some embodiments, a cache may be used to improve one or more aspects (e.g., latency, power, and/or the like) of accessing data in an underlying medium. For example, the cache logic 112 may configure the cache portion 110 of the memory media 102 to operate as a cache for a portion of the storage media 104. In such a configuration, the control logic 108 may receive a storage access request to write user data in the portion of the storage media 104. However, the cache logic 112 may, based on the storage access request (e.g., a write request), store a copy of the user data in the cache portion 110 of the memory media 102. In some embodiments, the cache logic 112 may also proceed (e.g., without delay) to write the user data to the portion of the storage media 104 as shown by arrow 105, e.g., if the cache logic 112 implements a write-through policy, or the cache logic 112 may wait until the user data is evicted from the cache portion 110 of the memory media 102 to write the user data to the portion of the storage media 104 as shown by arrow 105, e.g., if the cache logic 112 implements a write-back policy. In some embodiments, the cache logic 112 may implement a cache policy (e.g., a predictive policy, eviction policy, and/or the like) in which the cache logic 112 may copy user data from storage media 104 to the cache portion 110 of the memory media 102 in anticipation of the user data being accessed by a user. Depending on the implementation details, the cache logic 112 may evict other user data from the cache portion 110 of the memory media 102 to make room for the user data being copied from the storage media 104.

When the control logic 108 receives a storage access request to read the user data from the portion of the storage media 104, the cache logic 112 may service the storage access request (e.g., a read request) by loading the user data from the cache portion 110 of the memory media 102 as shown by arrow 103 instead of reading the user data from the portion of the storage media 104. In some embodiments, the cache portion 110 of the memory media 102 may be implemented with memory media 102 that may have lower access latency than the portion of the storage media 104. Thus, depending on the implementation details, the use of a cache may reduce the latency associated with accessing data from the underlying media. Additionally, or alternatively, the use of a cache may reduce the amount of power consumption associated with performing an access operation to access data from the underlying media (e.g., a page read) because the data may already be available in the cache portion 110 of the memory media 102.

In some embodiments, the control logic 108 may include access control logic 114 that may configure and/or control the operation of the memory media 102 and/or storage media 104 (or one or more portions thereof) to be visible or invisible to a user, to be accessible as memory, as storage, or a combination thereof, and/or the like. For example, in some embodiments, the access control logic 114 may operate to cause a portion of the storage media 104 (which may have a native block-based interface scheme) to appear as visible memory (e.g., volatile memory and/or persistent memory). For instance, if the device 100 receives a load command to access a byte of data stored in the storage media 104 (e.g., using a memory access protocol through the communication interface 106), and the requested data is not stored in the cache 110, the access control logic 114 may read, from the storage media 104, a page in which the requested byte may be located. The access control logic 114 may obtain the requested byte from the page and return the requested byte in response to the load command (e.g., again using the memory access protocol through the communication interface 106). In some embodiments, a memory access interface and/or protocol may access data in units of cache lines (e.g., 64 bytes), and thus, the access control logic 114 may return a requested cache line of data from the page read from the storage media 104.

As a further example, the access control logic 114 may configure and/or control the operation of the memory media 102 to be accessible as visible memory (e.g., using a memory access protocol through the communication interface 106). In some embodiments, the access control logic 114 may implement a dual mode access scheme in which a portion of the storage media 104 may be accessed as either memory or storage.

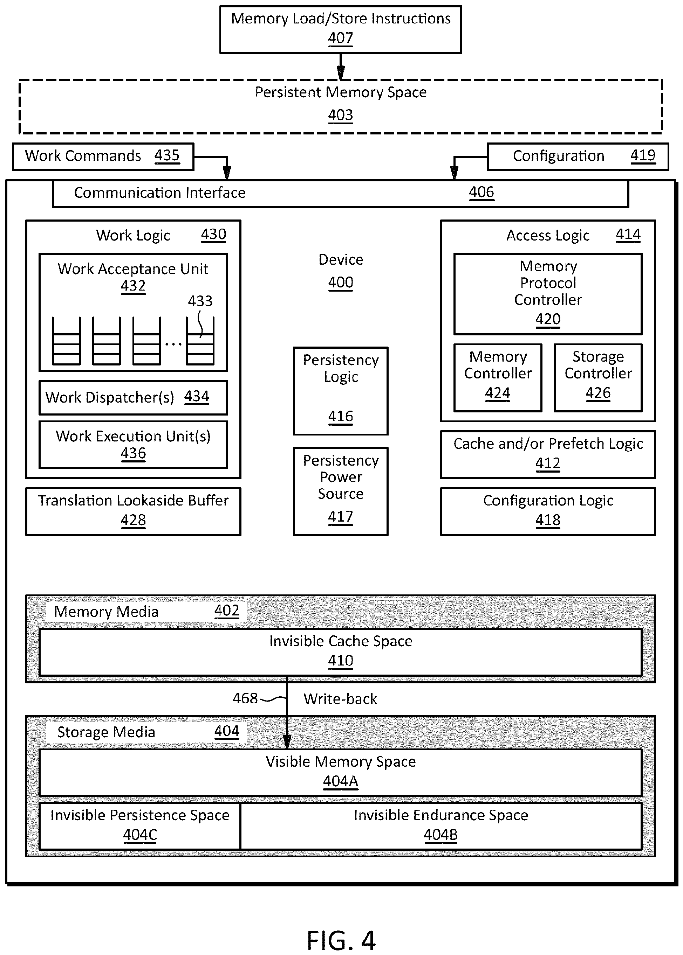

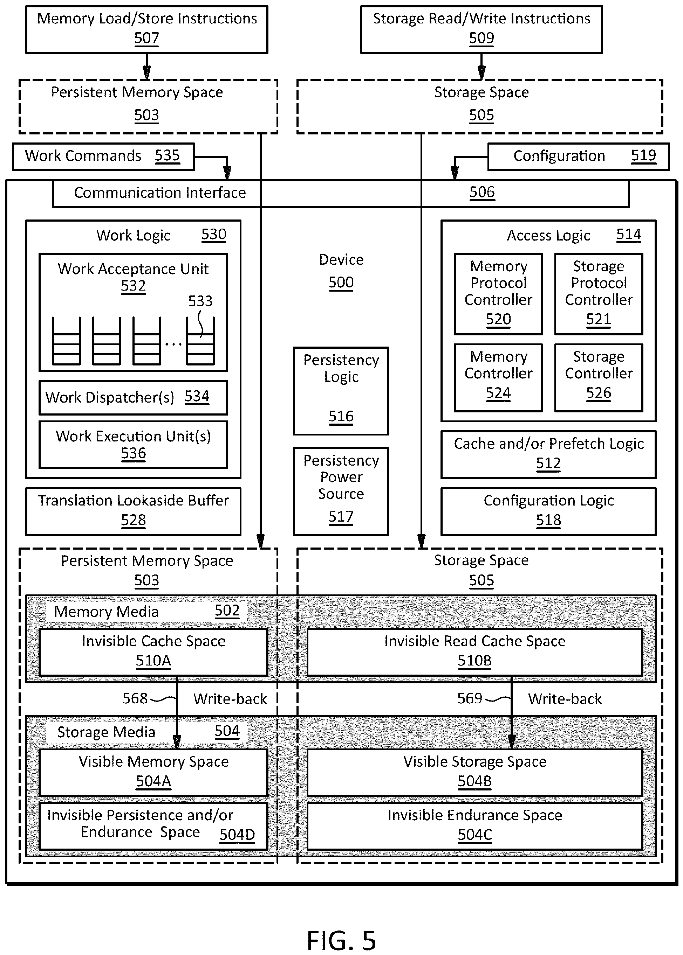

In some embodiments, the control logic 108 may include persistency logic 116 that may configure and/or control the operation of a portion of the memory media 102 to be persisted (e.g., copied to nonvolatile memory), for example, to the storage media 104 (e.g., based on a power loss event). For example, in embodiments in which a portion of the memory media 102 may be configured as an invisible cache 110 for a portion of the storage media 104 that may be configured as visible persistent memory, the persistency logic 116 may flush (e.g., copy) the contents of the cache 110 to the storage media 104 in response to a power loss event. Example embodiments of a persistent memory space that may be implemented with an invisible cache in memory media for a visible memory space in storage media are described below with respect to Figs. 4 and 5.

In some embodiments, the control logic 108 may include configuration logic 118 that may enable a user to configure one or more of the components, operations, and/or the like of the device 100. For example, the configuration logic 118 may receive commands, instructions, and/or the like from a user (e.g., through the communication interface 106) that may enable a user to specify a size of the cache 110, whether the cache 110 operates as volatile memory and/or persistent memory, how much of the storage media 104 may be accessible as memory, how much of the storage media 104 may be accessible as storage, how much of the storage media 104 may be used to persist (e.g., store in nonvolatile media) some or all of the cache 110, and/or the like.

In some embodiments, although all or a portion of a medium may be referred to as being configured as a cache, configured as visible, configured as invisible, and/or the like, in some implementations, one or more controllers may actually be configured to use the medium in a manner that may cause the medium to appear as cache, appear as visible, appear as invisible, and/or the like. Thus, in some embodiments, a reference to a medium configured in a certain manner may refer to an arrangement in which a controller (e.g., control logic) may be configured to cause the medium to operate as though it is configured in the certain manner. For example, in an embodiment in which a portion of storage media 104 may be configured as visible memory that may be accessible to a user (e.g., in units of 64-byte cache lines using a memory access protocol through the communication interface 106), the user may not directly access the portion of the storage media 104. Instead, the control logic 108 may act as an intermediary to access, on behalf of the user, the portion of the storage media 104 (e.g., in units of pages and/or blocks using an underlying page and/or block-based interface, e.g., using a flash translation layer (FLT) in a solid state drive (SSD)). In such a configuration, the control logic 108, cache logic 112, access control logic 114, persistency logic 116, configuration logic 118, and/or the like, may translate one or more access requests of a first type to one or more access requests of a second type. For example, memory load and/or store requests which may usually be used to access memory media may be translated to and/or from storage read and/or write requests which may usually be used to access storage media.

Moreover, in such a configuration, one or more underlying caches (e.g., a hidden cache in addition to media configured to appear as a visible cache to a user) may be used to implement one or more translations. For example, in a configuration in which a portion of a storage media 104 may be configured as visible memory, the control logic 108 may receive, from a user, a memory access request to load a cache line of data (e.g., a 64-bit cache line) from the portion of the storage media 104 configured as visible memory. However, the storage media may only be accessible in units of 4K byte pages. Thus, to perform a memory access request, the control logic 108 may translate the memory access request to a storage read request that may read a page containing the requested cache line from the storage media 104 and store it in a cache that may be hidden from the user. The control logic 108 may then load the requested cache line of data from the hidden cache and return it to the user in response to the memory access request.

The embodiment illustrated in Fig. 1 may be used, for example, to implement devices having various configurations of memory media and/or storage media which may be referred to as modes of operation. Depending on the implementation details, some embodiments may present a relatively large storage media as a volatile memory space, a persistent memory space, a storage space, or a combination thereof.

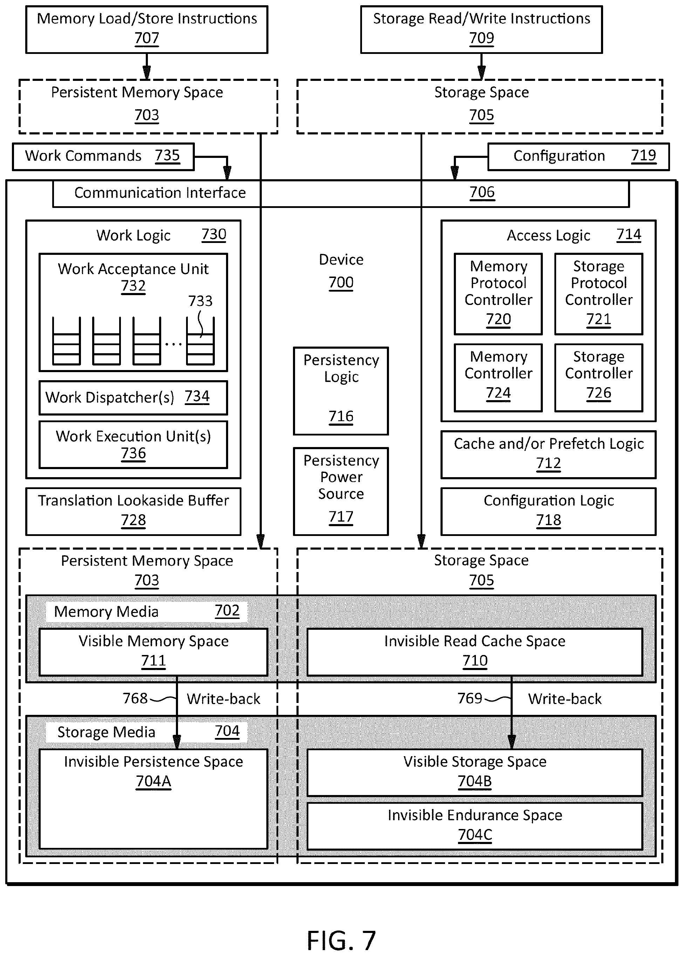

The arrows 103, 105, and/or 107 shown in Fig. 1 may illustrate data flow that, depending on the implementation details, may show end-to-end data flow and to simplify the drawing may not illustrate one or more intermediate components such as memory device interfaces, storage device interfaces, translation apparatus (e.g., a flash translation layer (FTL)), buffers, controllers, and/or the like, through which the data may flow. For example, in some embodiments, data that may be transferred between the communication interface 106 and storage media 104 (e.g., using a Nonvolatile Memory Express (NVMe) protocol) as shown by arrow 107 may pass through a storage protocol controller (e.g., an NVMe controller as illustrated in Figs. 7-9) in control logic 108. As another example, data that may be transferred between the communication interface 106 and memory media 102 (e.g., using a CXL protocol) as shown by arrow 103 may pass through a memory protocol controller (e.g., a CXL interface controller as illustrated in Figs. 5-9) in control logic 108. As a further example, data that may be transferred between the memory media 102 and the storage media 104 as shown by arrow 105 may pass through a memory protocol controller (e.g., a CXL interface controller) and/or a storage protocol controller (e.g., an NVMe controller) in control logic 108.

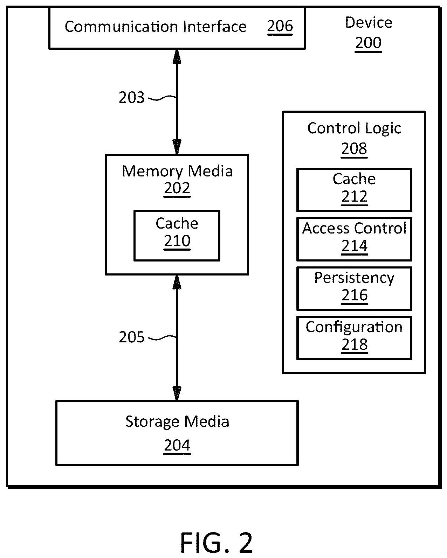

Fig. 2 illustrates another embodiment of a device having memory and storage media in accordance with example embodiments of the disclosure. The device 200 illustrated in Fig. 2 may include one or more elements similar to the embodiment illustrated in Fig. 1 in which similar elements may be indicated by reference numbers ending in, and/or containing, the same digits, letters, and/or the like.

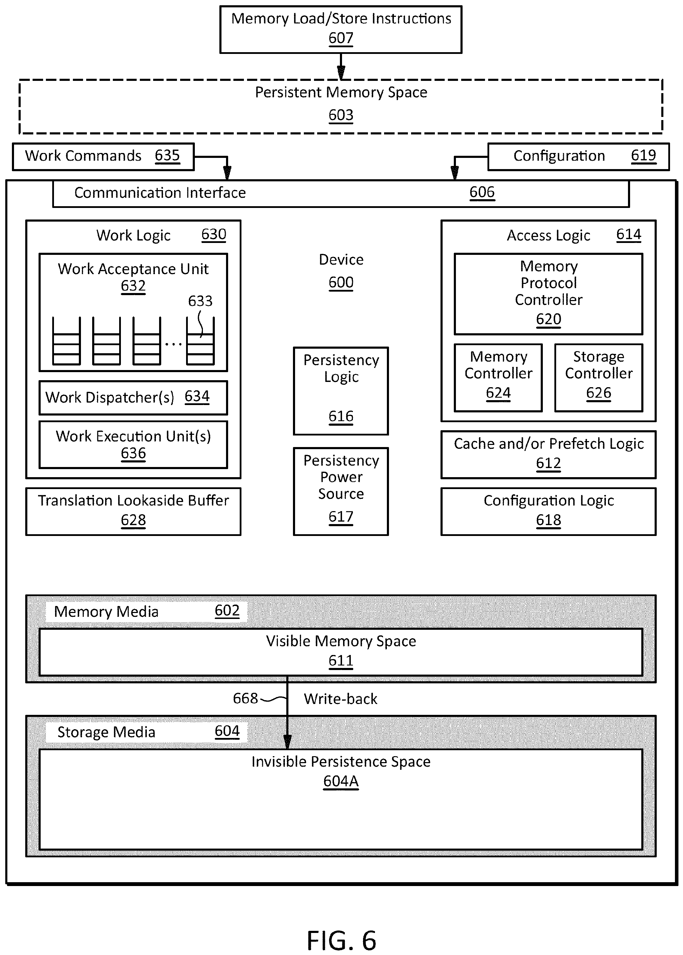

Referring to Fig. 2, the device 200 may include memory media 202, storage media 204, a communication interface 206, and/or control logic 208 that may operate in a manner similar to corresponding components in Fig 1. In the embodiment illustrated in Fig. 2, however, the access control logic 214 may configure and/or control the memory media 202 to appear as persistent memory that may be visible to (e.g., accessible by) a user through the communication interface 206. The persistency logic 216 may configure and/or control the memory media 202 to be persisted, for example, to the storage media 204 (e.g., based on a power loss event). In some embodiments, the access control logic 214 may essentially implement an entire visible persistent memory space with a portion of the memory media 202 that may be persisted to the storage media 204. Depending on the implementation details, this may result in a relatively high-performance (e.g., low latency) persistent memory space because, for example, essentially all access requests for the persistent memory space may be serviced by the memory media 202 rather than involving an access of the storage media 204. Example embodiments of a persistent memory space that may be implemented with a visible memory space in memory media with an invisible persistence space in storage media are described below with respect to Figs. 6 and 7.

The embodiment illustrated in Fig. 2 may be used, for example, to implement devices having various configurations of memory media and/or storage media which may be referred to as modes of operation.

The arrows 203 and/or 205 shown in Fig. 2 may illustrate data flow that, depending on the implementation details, may show end-to-end data flow and to simplify the drawing may not illustrate one or more intermediate components such as memory device interfaces, storage device interfaces, translation apparatus (e.g., a flash translation layer (FTL)), buffers, controllers, and/or the like, through which the data may flow. For example, in some embodiments, data that may be transferred between the communication interface 206 and memory media 202 (e.g., using a CXL protocol) as shown by arrow 203 may pass through a memory protocol controller (e.g., a CXL interface controller) in control logic 208. As a further example, data that may be transferred between the memory media 202 and the storage media 204 as shown by arrow 205 may pass through a memory protocol controller (e.g., a CXL interface controller) and/or a storage protocol controller (e.g., an NVMe controller) in control logic 208.

In some embodiments, memory media may be implemented with volatile memory media such as dynamic random access memory (DRAM), static random access memory (SRAM), and/or the like, whereas storage media may be implemented with nonvolatile memory media such as magnetic media, solid state nonvolatile memory media (e.g., flash memory which may include not-AND (NAND) flash memory, NOR flash memory, cross-gridded nonvolatile memory, memory with bulk resistance change, phase change memory (PCM), and/or the like), optical media, and/or the like.

In some embodiments, memory media may be addressable in relatively smaller units such as bytes, words, cache lines, and/or the like, whereas storage media may be addressable in relatively larger units such as pages, blocks, sectors, and/or the like.

In some embodiments, memory media may be accessed by software using load and/or store instructions, whereas storage media may be accessed by software using read and/or write instructions.

In some embodiments, memory media may be accessed using a memory interface and/or protocol such as double data rate (DDR) of any generation (e.g., DDR4, DDR5, etc.), direct memory access (DMA), remote DMA (RDMA), Open Memory Interface (OMI), Compute Express Link (CXL), Gen-Z, and/or the like, whereas storage media may be accessed using a storage interface and/or protocol such as serial ATA (SATA), Small Computer System Interface (SCSI), serial attached SCSI (SAS), Nonvolatile Memory Express (NVMe), NVMe over fabrics (NVMe-oF), and/or the like. In some embodiments, a memory interface and/or protocol may access data in relatively smaller units such as bytes, words, cache lines, and/or the like, whereas a storage interface and/or protocol may access data in relatively larger units such as pages, blocks, sectors, and/or the like.

Any of the devices 100 and/or 200 as well as any other devices disclosed herein may be implemented in any form such as storage devices, accelerators, network interface cards and/or network interface controllers (NICs), and/or the like, having any physical form factor including one or more form factors used for storage devices (e.g., solid state drives (SSDs), hard disk drives (HDDs), optical drives, and/or the like) such as Peripheral Component Interconnect Express (PCIe) add-in cards, 3.5 inch drives, 2.5 inch drives, 1.8 inch drives, M.2 drives, U.2 and/or U.3 drives, Enterprise and Data Center SSD Form Factor (EDSFF) drives, any of the SFF-TA-100X form factors (e.g., SFF-TA-1002), NF1, and/or the like, using any connector configuration such as SATA, SCSI, SAS, M.2, U.2, U.3 and/or the like. In some embodiments, a device may be implemented in any other form, for example, as a collection of one or more components on a circuit board (e.g., integrated into a server motherboard, backplane, midplane, and/or the like).

Although some embodiments may be described in the context of cache media that may be implemented with memory media such as DRAM, in other embodiments, other types of media, e.g., storage media, may be used for cache media. For example, in some embodiments, some or all of the caches 110 and/or 210 may be implemented with media other than memory media that may have one or more relative characteristics (e.g., relative to a storage media 104 and/or 204) that may make one or both of them more suitable for their respective functions. For instance, in some embodiments, the storage media 104 and/or 204 may be implemented with magnetic media which may have a relatively higher capacity, lower cost, and/or the like, whereas some or all of the caches 110 and/or 210 may be implemented with NAND flash which may have relatively lower access latency that may make it relatively more suitable for use as a cache.

Any of the devices 100 and/or 200 as well as any other devices disclosed herein may be used in connection with one or more personal computers, smart phones, tablet computers, servers, server chassis, server racks, datarooms, datacenters, edge datacenters, mobile edge datacenters, and/or any combinations thereof.

Any of the communication interfaces 106 and/or 206 as well as any other communication interfaces disclosed herein may be implemented with any interconnect interface and/or protocol such as PCIe, NVMe, NVMe Key-Value (NVMe-KV), SATA, SAS, SCSI, Compute Express Link (CXL) and/or a one or more CXL protocols such as CXL.mem, CXL.cache, and/or CXL.io, Gen-Z, Coherent Accelerator Processor Interface (CAPI), Cache Coherent Interconnect for Accelerators (CCIX), and/or the like, or any combination thereof. Alternatively, or additionally, any of the communication interfaces 106 and/or 206 as well as any other communication interfaces disclosed herein may be implemented with any networking interface and/or protocol such as Ethernet, Transmission Control Protocol/Internet Protocol (TCP/IP), remote direct memory access (RDMA), RDMA over Converged Ethernet (RoCE), Fibre Channel, InfiniBand (IB), iWARP, NVMe-over-fabrics (NVMe-oF), and/or the like, or any combination thereof.

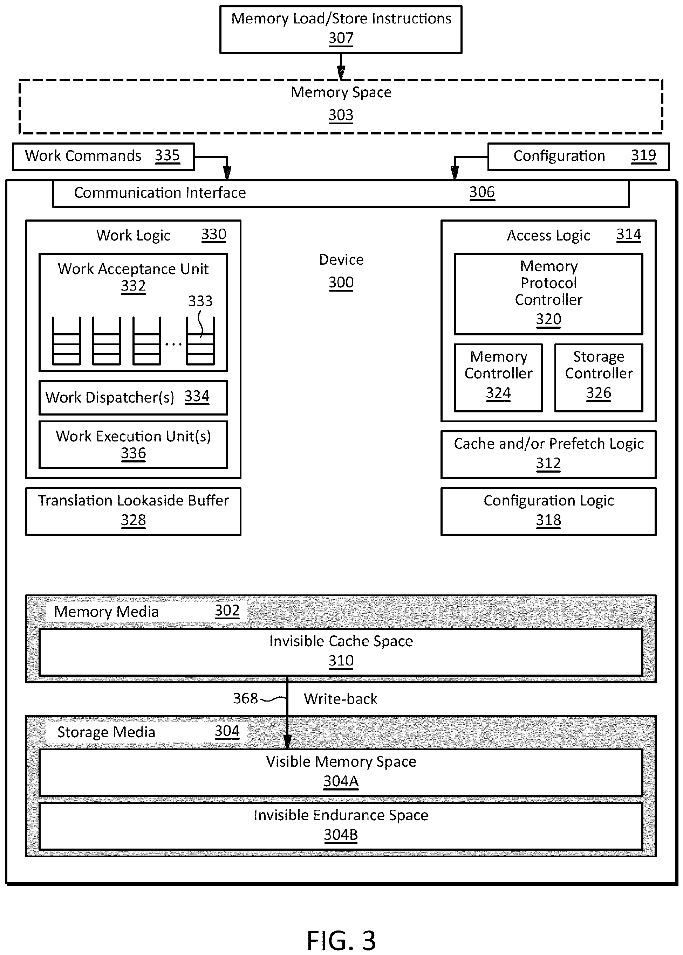

Fig. 3 illustrates a first example embodiment of a scheme for configuring and/or operating a device having memory media and storage media in accordance with example embodiments of the disclosure. The embodiment illustrated in Fig. 3 may be used to implement, and/or may be implemented with, for example, the device illustrated in Fig. 1 in which similar elements may be indicated by reference numbers ending in, and/or containing, the same digits, letters, and/or the like.

Referring to Fig. 3, a device 300 may include memory media 302 that, in this example, may be implemented with DRAM but in other embodiments may be implemented with other types of memory media (e.g., volatile media that may have relatively high access speeds, e.g., relatively low latency). The device 300 may also include storage media 304 that, in this example, may be implemented with NAND flash but in other embodiments may be implemented with other types of storage media (e.g., nonvolatile media that may have relatively high capacity and/or relatively low cost).

The device 300 may also include a communication interface 306 which, in this example, may implement one or more CXL protocols but in other embodiments may implement, or be implemented with, any other interfaces, protocols, and/or the like that may enable a user to access data as memory (e.g., DDR, OMI, Gen-Z, DMA, RDMA, and/or the like). The CXL (or other) protocol(s) may operate with any underlying transport scheme (e.g., physical layer, transport layer, and/or the like) including, for example, PCIe, Ethernet, InfiniBand, and/or the like.

The device 300 may also include cache and/or prefetch logic 312 that may configure and/or control the operation of a cache portion 310 of the memory media 302. Examples of cache control operations may include implementing one or more cache mappings, data writing policies (e.g., write-through, write-back, and/or the like), cache replacement policies, and/or the like.

The device 300 may also include access control logic 314 that may be implemented, at least in part, with a memory protocol controller 320 that, in this embodiment, may implement CXL (e.g., as a CXL interface controller), but in other embodiments may be implemented with any other type of protocol controller that may enable a user to access data as memory. The access control logic 314 may include a memory 324 controller which, in this example, may be implemented with a DRAM controller that may control DRAM that may be used to implement the memory media 302. The access control logic 314 may also include a storage controller 326 which, in this example, may be implemented with a flash translation layer (FTL) and/or a NAND controller (e.g. a NAND channel controller) that may control NAND flash that may be used to implement the storage media 304. Examples of operations that may be implemented by access control logic 314 may include any of the memory and/or storage media access schemes disclosed herein including those described and illustrated with respect to Figs. 1 through 11.

In some embodiments, the device 300 may also include configuration logic 318 that may enable a user to configure one or more of the components and/or operations illustrated in Fig. 3, for example, based on configuration information 319. In an embodiment in which the communication interface 306 may implement CXL, the configuration information 319 may be received from a user, for example, using the CXL.io protocol. Examples of configuration information 319 may include amounts, types, and/or the like of memory media 302, storage media 304, invisible cache space 310, visible memory space 304A, and/or invisible endurance space 304B, one or more cache policies, and/or the like that the configuration logic 318 may use to configure the media and/or spaces illustrated in Fig. 3.

In some embodiments, the device 300 may also include a device translation lookaside buffer (TLB) 328 that may cache address translations, for example, to enable the device 300 to support shared virtual memory (SVM) by processing (e.g., directly) data from an application address space.

In some embodiments, the device 300 may also include work logic 330 that may enable the device 300 to implement one or more operations related to data movement, cache management, memory management, storage management, and/or the like. Examples of operations that may be implemented by the work logic 330 may include artificial intelligence (AI) and/or machine learning (ML) training, inferencing, classification, generation, and/or the like. The work logic 330 may include a work acceptance unit 332 (which may also be referred to as a work submission unit), one or more work dispatchers 334, and/or one or more work execution units 336. The work acceptance unit 332 may include one or more work queues 333 (which may also be referred to as submission queues) that may accept commands to invoke any of the operations implemented by the work logic 330. The work execution unit may execute, based on the commands received at the work acceptance unit 332, any of the operations implemented by the work logic 330. The work dispatcher(s) 334 may fetch entries from the work queue(s) 333 and pass the entries to the work execution unit(s) 336 for execution. The work dispatcher(s) 334 may determine an order of execution of the commands based on various factors such as the availability, capacity, capability, and/or the like of one or more work execution units 336, the type of command and/or operation, one or more priorities, privileges, and/or the like.

Examples of commands and/or operations related to data movement may include moving data to and/or from visible (which may also be referred to as exposed to and/or accessible by a user) memory, storage, and/or the like (e.g., moving data between a host system memory and a visible memory space in the storage device), prefetching data from a storage medium 304 to a cache 310, and/or the like. In some embodiments, the work execution unit(s) 336 may perform data transfer operations using, for example, DMA, RDMA, RoCE, and/or the like.

Examples of commands and/or operations related to cache management may include prefetching and/or invalidating data for writing back data (e.g., to storage medium 304) and/or discarding a portion of data in a cache 310. Examples of commands and/or operations related to storage management may include invalidating data, for example, to inform the storage controller 326 that data in the storage medium 304 may be invalid and therefore may be deleted and/or garbage collected from the storage medium 304.

In some embodiments, one or more commands and/or operations implemented by the work logic 330 may be offloaded from a host and/or other user. Thus, depending on the implementation details, the work logic 330 may provide relatively efficient and/or low-overhead scheme for moving data in user mode, kernel-mode, and/or the like.

Alternatively, or additionally, some embodiments may implement one or more commands and/or operations similar to the work logic 330 using, for example, a relatively simple mechanism such as implementing commands using one or more CXL.io mechanisms (e.g., vendor-defined CXL.io mechanisms).

Any or all of the access logic 314, cache and/or prefetch logic 312, configuration logic 318, work logic 330, translation lookaside buffer 328, and/or the like, may be characterized and/or referred to, collectively and/or individually, as control logic.

In the embodiment illustrated in Fig. 3, a portion of the storage media 304 may be configured as a visible memory space 304A that may be exposed to a user as a memory space 303 (e.g., a volatile memory space). A portion of the memory media 302 may be configured as an invisible (to the user) cache space 310 for the visible memory space 304A. The cache space 310 may be used, for example, to reduce access times for frequency used data (which may be placed in the cache space 310 by cache and/or prefetch logic 312) and/or data that may be prefetched to the cache space 310 (e.g., by cache and/or prefetch logic 312, for example, based on receiving a prefetch work command 335 from a user).

A user may access the memory space 303 using one or more memory load and/or store (load/store) instructions 307 that may be sent to the access logic 314 through the communication interface 306 using, for example, the CXL.mem protocol. If the data to be accessed is located in the cache space 310 (e.g., a cache hit) for either a load or store instruction, the cache and/or prefetch logic 312 may use the memory controller 324 to load or store the data to or from the cache space 310.

For example, if the access is a store, and the previous version of the data at the designated memory address is already present in the cache space 310 (e.g., a cache hit), the cache and/or prefetch logic 312 may, depending on a cache replacement and/or eviction policy, store the new version of the data in the invisible cache space 310 and/or the visible memory space 304A. For instance, if the cache and/or prefetch logic 312 implements a least recently used (LRU) eviction policy, the cache and/or prefetch logic 312 may store the new data in the cache space 310 (e.g., because recently used data may be likely to be accessed again soon). The cache and/or prefetch logic 312 may also store a copy of the new data in the visible memory space 304A in storage media 304 without delay if the cache and/or prefetch logic 312 implements a write-through policy, or the cache and/or prefetch logic 312 may store a copy of the new data in the visible memory space 304A in storage media 304 at a later time, (e.g., when the new data is later evicted) if the cache and/or prefetch logic 312 implements a write-back policy (e.g., an opportunistic write-back). If, however, the cache and/or prefetch logic 312 implements a most recently used (MRU) eviction policy, the cache and/or prefetch logic 312 may not store the new data in the cache space 310 in memory media 302 (e.g., because recently used data may not be likely to be accessed again for a relatively long time). Instead, the cache and/or prefetch logic 312 may store the new data in the visible memory space 304A in storage media 304.

As another example, if the access is a load, and the previous version of the data at the designated memory address is already present in the cache space 310 (e.g., a cache hit), the cache and/or prefetch logic 312 may load the requested data from the cache space 310.

If, however, the accessed data is not located in the cache space 310 (e.g., a cache miss), the access logic 314 may use the storage controller 326 to read or write the data from or to the visible memory space 304A. Depending on the implementation details, the access logic 314 and/or the storage controller 326 may access a page, block, sector, and/or the like, containing the requested data from the visible memory space 304A and extract or insert the requested data which may be a byte, word, cache line, and/or the like. If the access is a store, the access logic 314 and/or the storage controller 326 may write the modified page, block, sector, and/or the like, back to the visible memory space 304A. Depending on a cache replacement policy implemented by the cache and/or prefetch logic 312, a copy of the accessed data may also be stored in the cache space 310. If the access is a load, the access logic 314 and/or the storage controller 326 may return (e.g., send to the user that sent the request) the requested data which may be a byte, word, cache line, and/or the like. In some embodiments, the access logic 314 and/or the storage controller 326 may store (e.g., temporarily) the page, block, sector, and/or the like, containing the requested data in a second cache after reading it from the visible memory space 304A in the storage media 304. The access logic 314 and/or the storage controller 326 may then extract the requested data from the second cache. The second cache may be implemented, for example, as part of the invisible cache space 310, within the access logic 314, and/or the like.

In some embodiments, a portion of the storage media 304 may be configured as invisible (to a user) endurance space (e.g., an overprovisioning (OP) space) 304B, for example, to enhance the endurance of the portion of the storage media 304 implemented as the visible memory space 304A. In some embodiments, the invisible endurance space 304B may be implemented with a relatively large amount of storage media to compensate for a relatively large number of write cycles that may be encountered with a visible memory space 304A exposed as memory.

Depending on the implementation details, the embodiment illustrated in Fig. 3 may expose a relatively large amount of storage media 304 as a volatile memory space 303 at a relatively low cost. Moreover, the portion of memory media 302 configured as cache space 310 may reduce access times (e.g., latency) for the memory space 303.

The memory and/or storage spaces illustrated in Fig. 3 are not limited to any specific sizes. For purposes of illustrating some aspects of the disclosure, however, in one example embodiment, the visible memory space 304A and invisible endurance space 304B may each be implemented with 1TB of storage media, the memory space 303 may be implemented as a 1TB memory space, and the invisible cache space 310 may be implemented as a 16GB cache space.

Depending on the implementation details, the memory space 303 may be suitable to be mapped as system memory (e.g., memory for general use that may be allocated using operating system (e.g., Linux) memory allocation commands such as malloc).

Depending on the implementation details, a user such as an application may use the memory space 303 implemented in the embodiment illustrated in Fig. 3 without any awareness of, and/or capability of manipulating, the underlying configuration of memory media 302 and/or storage media 304. For example, a host may run an operating system, virtual machine manager, and/or the like that may configure the memory space 303 and allocate memory from the memory space 303 to an application, virtual machine, and/or the like running on the host. The application, virtual machine, and/or the like may use the allocated memory from the memory space 303 without any awareness that the allocated memory may be implemented with storage media 304 and/or cache space 310 in memory media 302.

In some embodiments, a user (e.g., a host, an application, a process, a service, an operating system, another device, and/or the like) that is aware of, and/or capable of manipulating, the underlying configuration of memory media 302 and/or storage media 304, may use one or more features to enhance the performance, endurance, and/or the like of the device illustrated in Fig. 3. For example, if a user will be accessing data currently stored in the visible memory space 304 of the storage media 304, and a copy of the data is not stored in the cache space 310, the user may send a prefetch request to the cache and/or prefetch logic 312 (e.g., by submitting a work command 335 to the work acceptance unit 332) to cause the cache and/or prefetch logic 312 to store a copy of the data in the cache space 310.

As another example, if a user will no longer access data currently in the cache space 310, the user may send a cache invalidate request to the cache and/or prefetch logic 312 (e.g., by submitting a work command 335 to the work acceptance unit 332) to cause the cache and/or prefetch logic 312 to invalidate the data in the cache space 310 and/or a corresponding location in the visible memory space 304. Depending on the implementation details, this may enable the storage controller 326 to garbage collect the data in the storage media 304.

As a further example, if a user will be using data currently stored in system memory at a host, the user may send a data transfer request to transfer the data from the system memory to the memory space 303 (e.g., by submitting a work command 335 to the work acceptance unit 332). The work dispatcher(s) 334 may schedule the data transfer request to be executed, for example, by a work execution unit that may transfer the data, for example, using an RDMA operation.

In some embodiments, one or more of the features to enhance the performance, endurance, and/or the like (e.g., prefetch commands, data transfer requests, cache invalidate commands, and/or the like) may be used by middleware at a host or other user.

Fig. 4 illustrates a second example embodiment of a scheme for configuring and/or operating a device having memory media and storage media in accordance with example embodiments of the disclosure. The embodiment illustrated in Fig. 4 may be used to implement, and/or may be implemented with, for example, the device illustrated in Fig. 1 in which similar elements may be indicated by reference numbers ending in, and/or containing, the same digits, letters, and/or the like. The device 400 illustrated in Fig. 4 may include one or more elements similar to the embodiment illustrated in Fig. 3 in which similar elements may be indicated by reference numbers ending in, and/or containing, the same digits, letters, and/or the like.

In some aspects, the configuration and/or operation of the device 400 illustrated in Fig. 4 may be similar to the configuration and/or operation of the device 300 illustrated in Fig. 3. However, in the embodiment illustrated in Fig. 4, at least a portion of the memory space 403 exposed to a user may be implemented as a persistent memory space. The persistent memory space 403 may be implemented with visible memory space 404A in storage media 404 which may be inherently persistent.

The persistent memory space 403 may also be implemented with an invisible cache space 410 within memory media 402 that may be configured as a cache for the visible memory space 404A in storage media 404. To provide persistency to the invisible cache space 410, the device 400 may configure a portion of the storage media 404 as an invisible persistence space 404C. The device 400 may also include persistency logic 416 and/or a persistency power source 417. In response to a power loss event, the persistency logic 416 may perform a data transfer operation to flush the contents of the invisible cache space 410 to the invisible persistence space 404C. The persistency power source 417 may be configured to provide power to one or more portions of the persistency logic 416, the memory media 402, the storage media 404, and/or any other components that may be involved in flushing data from the invisible cache space 410 to the invisible persistence space 404C.

In some embodiments, the persistency power source 417 may be implemented with one or more capacitors (e.g., supercapacitors), internal and/or external batteries, and/or the like. In some embodiments, the persistency logic 416 may be implemented with or as a Global Persistency Flush (GPF) unit, for example, as part of CXL.

Any or all of the access logic 414, cache and/or prefetch logic 412, configuration logic 418, work logic 430, translation lookaside buffer 428, persistency logic 416, and/or the like, may be characterized and/or referred to, collectively and/or individually, as control logic.

Depending on the implementation details, the embodiment illustrated in Fig. 4 may expose a relatively large amount of storage media 404 as a persistent memory space 403 at a relatively low cost. Moreover, the portion of memory media 402 configured as cache space 410 may reduce access times (e.g., latency) for the persistent memory space 403. As with the embodiment illustrated in Fig. 3, the access logic 414 in the device 400 may enable a user to access the visible memory space 404A in storage media 404 as memory, for example, using CXL.mem through the communication interface 406.

In some embodiments, the persistent memory space 403 may be implemented as special-purpose memory (which may also be referred to as protected memory or restricted memory). For example, if the device 400 is accessed using an operating system such as Linux, some or all of the persistent memory space 403 may be mapped as special-purpose memory which, depending on the implementation details, may prevent it from being allocated as system (e.g., general) memory using memory allocation commands such as malloc.

The memory and/or storage spaces illustrated in Fig. 4 are not limited to any specific sizes. For purposes of illustrating some aspects of the disclosure, however, in one example embodiment, the visible memory space 404A may be implemented with 1TB of storage media, the persistent memory space 403 may be implemented as a 1TB memory space, the invisible endurance space 404B may be implemented with 894GB of storage media, and the invisible cache space 410 may be implemented 16GB of memory media 402.

Fig. 5 illustrates a third example embodiment of a scheme for configuring and/or operating a device having memory media and storage media in accordance with example embodiments of the disclosure. The embodiment illustrated in Fig. 5 may be used to implement, and/or may be implemented with, for example, the device illustrated in Fig. 1 in which similar elements may be indicated by reference numbers ending in, and/or containing, the same digits, letters, and/or the like. The device 500 illustrated in Fig. 5 may include one or more elements similar to the embodiments illustrated in Fig. 3 and/or Fig. 4 in which similar elements may be indicated by reference numbers ending in, and/or containing, the same digits, letters, and/or the like.

In some aspects, the configuration and/or operation of the device 500 illustrated in Fig. 5 may be similar to the configuration and/or operation of the device 400 illustrated in Fig. 4. However, in the embodiment illustrated in Fig. 5, a first portion of the storage media 504 may be configured as visible memory space 504A, and a second portion of the storage media 504 may be configured as visible storage space 504B. Thus, portions of the storage media 504 may be exposed as both persistent memory space 503 and storage space 505.

A first portion of the memory media 502 may be configured as invisible cache space 510A for the visible memory space 504A (which may be exposed as persistent memory space 503). Although the visible storage space 504B may be operated without a cache, in some embodiments, a second portion of the memory media 502 may be configured as invisible read cache space 510B for the visible storage space 504B.

In some embodiments, a portion 504D of the storage media 504 may be configured as invisible persistence space for the invisible cache space 510A. Additionally, or alternatively, the portion 504D of the storage media 504 may be configured as invisible endurance space for the visible memory space 504A. In some embodiments, a portion of the storage media 504 may be configured as invisible endurance space 504C for the visible storage space 504B.

To provide access to the visible storage space 504B as storage, the access logic 514 may include a storage protocol controller 521 that, in this embodiment, may be implemented with an NVMe controller, but in other embodiments may be implemented with any other type of protocol controller that may enable a user to access data as storage, for example, using logical block addresses (LBAs). In some embodiments, an NVMe protocol may be implemented with an underlying transport scheme based on CXL.io.

A user may access the storage space 505 using one or more storage read and/or write (read/write) instructions 509 that may be sent to the access logic 514 through the communication interface 506 using, for example, a storage protocol (which may also be referred to as a storage access protocol) such as NVMe (e.g., NVMe, NVMe-oF, and/or the like). If the data accessed is located in the cache space 510B (e.g., a cache hit), the access logic 514 may use the storage controller 524 to read or write the data to or from the cache space 510B. If the access is a write, the corresponding memory location in the visible storage space 504B in the storage media 504 may be updated using a write back operation 569 (e.g., opportunistic write back), a write through operation, and/or the like, which may be controlled, for example, by the cache and/or prefetch logic 512.

If, however, the accessed data is not located in the cache space 510B (e.g., a cache miss), the access logic 514 may use the storage controller 526 to read or write the data from or to the visible storage space 504B. If the access is a write, the access logic 514 and/or the storage controller 526 may write the data (e.g., page, block, sector, and/or the like) to the visible storage space 504B. Depending on a cache replacement policy implemented by the cache and/or prefetch logic 512, a copy of the accessed data may be stored in the cache space 510B.

Thus, in some embodiments, the device 500 may expose a memory space 503 (which may be accessed using a memory access protocol such as CXL) and a storage space 505 (which may be accessed using a storage access protocol such as NVMe), both of which may be implemented with storage media 504. Either or both of the memory space 503 and/or storage space 505 may also implement a cache (e.g., cache space 510A for memory space 503 and/or cache space 510B for storage space 505.

In some embodiments, the memory space 503 and storage space 505 may be implemented using separate logical devices. For example, the memory protocol controller 520 may be implemented with a CXL interface controller as a first logical device, and the storage protocol controller 521 may be implemented with an NVMe controller. Moreover, in some embodiments, the communication interface 506 may be implemented with a single underlying transport scheme (e.g., PCIe, CXL.io, Ethernet, InfiniBand, and/or the like), connector, and/or the like. Thus, in some embodiments, a user may access, through the same slot, connector, and/or the like, a memory space 503 with a first logical device using memory load/store commands and a memory access protocol such as CXL, and a storage space 505 with a second logical device using storage read/write commands and a storage protocol such as NVMe.

Depending on the implementation details, the embodiment illustrated in Fig. 5 may expose a relatively large amount of storage media 504 as a persistent memory space 503 at a relatively low cost. Moreover, to the extent the storage media 504 may include more capacity than may be used for persisting the cache space 510A, the excess storage media 504 may be implemented as visible storage space 504B which may be exposed as a storage space 505. Additionally, the one or more portions of memory media 502 configured as cache space 510A and/or 510B may reduce access times (e.g., latency) for the persistent memory space 503 and/or storage space 505.

In some embodiments, the persistent memory space 503 may be implemented as special-purpose memory. For example, if the device 500 is accessed using an operating system such as Linux, some or all of the persistent memory space 503 may be mapped as special-purpose memory which, depending on the implementation details, may prevent it from being allocated as system (e.g., general) memory using memory allocation commands such as malloc.

The memory and/or storage spaces illustrated in Fig. 5 are not limited to any specific sizes. For purposes of illustrating some aspects of the disclosure, however, in one example embodiment, the visible memory space 504A may be implemented with 256GB of storage media, the persistent memory space 503 may be implemented as a 256GB memory space, the invisible persistence and/or endurance space 504D may be implemented with 256GB of storage media, the invisible cache space 510A may be implemented 12GB of memory media, the visible storage space 504B may be implemented with 1TB of storage media, storage space 505 may be implemented as a 1TB storage space, the invisible endurance space 504C may be implemented with 512GB of storage media, and the invisible read cache space 510B may be implemented 4GB of memory media.

Any or all of the access logic 514, cache and/or prefetch logic 512, configuration logic 518, work logic 530, translation lookaside buffer 528, persistency logic 516, and/or the like, may be characterized and/or referred to, collectively and/or individually, as control logic.

Fig. 6 illustrates a fourth example embodiment of a scheme for configuring and/or operating a device having memory media and storage media in accordance with example embodiments of the disclosure. The embodiment illustrated in Fig. 6 may be used to implement, and/or may be implemented with, for example, the device illustrated in Fig. 2 in which similar elements may be indicated by reference numbers ending in, and/or containing, the same digits, letters, and/or the like. The device 600 illustrated in Fig. 6 may include one or more elements similar to the embodiments illustrated in Fig. 3, Fig. 4, and/or Fig. 5 in which similar elements may be indicated by reference numbers ending in, and/or containing, the same digits, letters, and/or the like.

In some aspects, the configuration and/or operation of the device 600 illustrated in Fig. 6 may be similar to the configuration and/or operation of the device 400 illustrated in Fig. 4. However, in the embodiment illustrated in Fig. 6, a portion of the memory media 602 may be configured as visible memory space 611 that may be exposed as persistent memory space 603. A portion of the storage media 604 may be configured as invisible persistence space 604A for the visible memory space 611. Some or all of the contents of the visible memory space 611 may be persisted (e.g., flushed) to the invisible persistence space 604A, for example, by the persistency logic 616 (e.g., based on a power loss event) using power supplied by the persistency power source 617.

A user may access the persistent memory space 603 using one or more memory load/store instructions 607 that may be sent to the access logic 614 through the communication interface 606 using, for example, the CXL.mem protocol.

Depending on the implementation details, the device 600 may provide a relatively high-performance (e.g., low latency and/or high bandwidth) persistent memory space 603 using a relatively low cost combination of memory media 602 (e.g., DRAM) and storage media 604 (e.g., NAND flash memory). In some embodiments, the access control logic 614 may implement essentially the entire persistent memory space 603 with the visible memory space 611 which may be implemented with relatively high performance DRAM. Depending on the implementation details, this may produce a relatively high-performance (e.g., low latency) persistent memory space 603 because, for example, essentially all access requests for the persistent memory space 603 may be serviced by the memory media 602 rather than involving an access of the storage media 604.

In some embodiments, the persistent memory space 603 may be implemented as special-purpose memory.

The memory and/or storage spaces illustrated in Fig. 6 are not limited to any specific sizes. For purposes of illustrating some aspects of the disclosure, however, in one example embodiment, the visible memory space 611 may be implemented with 16GB of memory media, the persistent memory space 603 may be implemented as a 16GB memory space, and the invisible persistence space 604A may be implemented with 1TB of storage media 604.

Any or all of the access logic 614, cache and/or prefetch logic 612, configuration logic 618, work logic 630, translation lookaside buffer 628, persistency logic 616, and/or the like, may be characterized and/or referred to, collectively and/or individually, as control logic.

Fig. 7 illustrates a fifth example embodiment of a scheme for configuring and/or operating a device having memory media and storage media in accordance with example embodiments of the disclosure. The embodiment illustrated in Fig. 7 may be used to implement, and/or may be implemented with, for example, the device illustrated in Fig. 2 in which similar elements may be indicated by reference numbers ending in, and/or containing, the same digits, letters, and/or the like. The device 700 illustrated in Fig. 7 may include one or more elements similar to the embodiments illustrated in Fig. 3, Fig. 4, Fig. 5, and/or Fig. 6 in which similar elements may be indicated by reference numbers ending in, and/or containing, the same digits, letters, and/or the like.

In some aspects, the configuration and/or operation of the device 700 illustrated in Fig. 7 may be similar to the configuration and/or operation of the device 500 illustrated in Fig. 5. However, in the embodiment illustrated in Fig. 7, a portion of the memory media 702 may be configured as visible memory space 711 that may be exposed as persistent memory space 703. A portion of the storage media 704 may be configured as invisible persistence space 704A for the visible memory space 711. Some or all of the contents of the visible memory space 711 may be persisted (e.g., flushed) to the invisible persistence space 704A, for example, by the persistency logic 716 (e.g., based on a power loss event) using power supplied by the persistency power source 717.

Depending on the implementation details, the device 700 may provide a relatively high-performance (e.g., low latency and/or high bandwidth) persistent memory space 703 using a relatively low cost combination of memory media 702 (e.g., DRAM) and storage media 704 (e.g., NAND flash memory) for persistence. In some embodiments, the access control logic 714 may implement essentially the entire persistent memory space 703 with the visible memory space 711 which may be implemented with relatively high performance DRAM. Depending on the implementation details, this may produce a relatively high-performance (e.g., low latency) persistent memory space 703 because, for example, essentially all access requests for the persistent memory space 703 may be serviced by the memory media 702 rather than involving an access of the storage media 704.

As with the device 500 illustrated in Fig. 5, the device 700 illustrated in Fig. 7 may implement the persistent memory space 703 with a first logical device and the storage space 705 with a second logical device. Thus, in some embodiments, a user may access, through the same slot, connector, and/or the like, a relatively high performance memory space 703 with a first logical device using memory load/store commands and a memory access protocol such as CXL, and a storage space 705 with a second logical device using storage read/write commands and a storage protocol such as NVMe. Moreover, the storage media 704 may include more capacity than may be used by invisible persistence space 704A to persist the visible memory space 711. Thus, the excess storage media may be used to implement visible storage space 704B which may be exposed as a storage space 705. Additionally, although the visible memory space 711 may be exposed as storage space 705 without cache, if a portion of the memory media 702 is configured as cache space 711, it may reduce access times (e.g., latency) for the storage space 705.

In some embodiments, the persistent memory space 703 may be implemented as special-purpose memory.

The memory and/or storage spaces illustrated in Fig. 7 are not limited to any specific sizes. For purposes of illustrating some aspects of the disclosure, however, in one example embodiment, the visible memory space 711 may be implemented with 12GB of memory media, the persistent memory space 703 may be implemented as a 12GB memory space, the invisible persistence space 704A may be implemented with 128GB of storage media, the invisible read cache space 710 may be implemented 4GB of memory media, the storage space 705 may be implemented as a 1TB storage space, the visible storage space 704B may be implemented with 1TB of storage media, and the invisible endurance space 704C may be implemented with 894GB of storage media.

Any or all of the access logic 714, cache and/or prefetch logic 712, configuration logic 718, work logic 730, translation lookaside buffer 728, persistency logic 716, and/or the like, may be characterized and/or referred to, collectively and/or individually, as control logic.

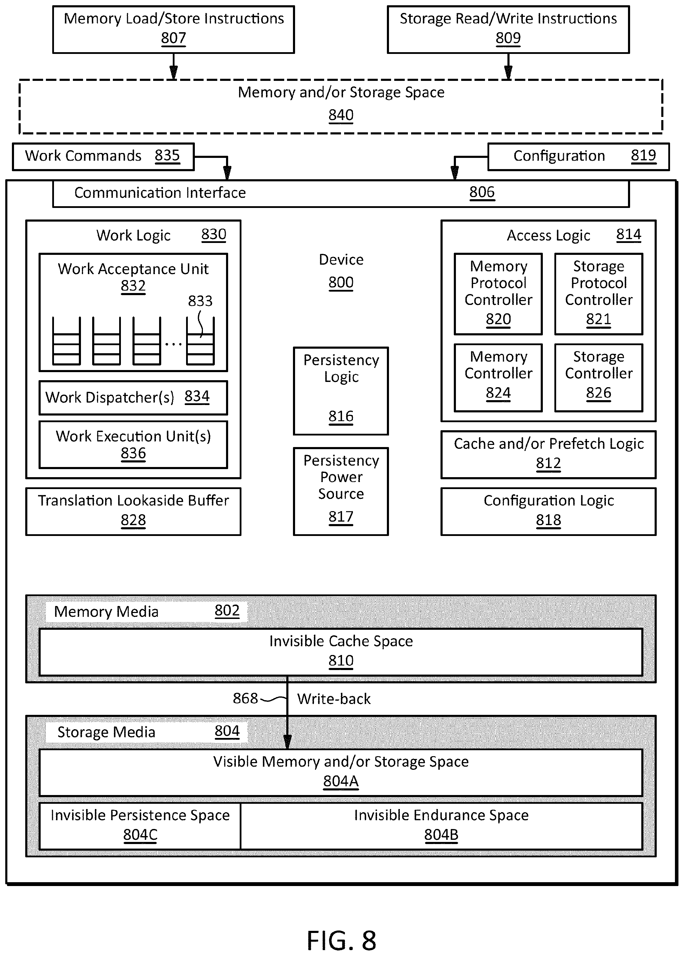

Fig. 8 illustrates a sixth example embodiment of a scheme for configuring and/or operating a device having memory media and storage media in accordance with example embodiments of the disclosure. The embodiment illustrated in Fig. 8 may be used to implement, and/or may be implemented with, for example, the device illustrated in Fig. 1 in which similar elements may be indicated by reference numbers ending in, and/or containing, the same digits, letters, and/or the like. The device 800 illustrated in Fig. 8 may include one or more elements similar to the embodiments illustrated in Fig. 3, Fig. 4, Fig. 5, Fig. 6, and/or Fig. 7 in which similar elements may be indicated by reference numbers ending in, and/or containing, the same digits, letters, and/or the like.

In some aspects, the configuration and/or operation of the device 800 illustrated in Fig. 8 may be similar to the configuration and/or operation of the device 400 illustrated in Fig. 4. However, in the embodiment illustrated in Fig. 8, a portion of the storage media 804 may be configured as a visible memory and/or storage space 804A that may be exposed as a memory and/or storage space 840 that may be accessed as storage and/or as memory. For example, the visible memory and/or storage space 804A may be accessed as memory using memory load/store instructions sent to the access logic 814 using a memory access protocol such as CXL (e.g., in an embodiment in which the memory protocol controller 820 is implemented with a CXL controller). Additionally, or alternatively, the visible memory and/or storage space 804A may be accessed as storage using storage read/write instructions sent to the access logic 814 using a storage access protocol such as NVMe (e.g., in an embodiment in which the storage protocol controller 821 is implemented with an NVMe controller).

In some embodiments, the visible memory and/or storage space 804A and the memory and/or storage space 840 that may be accessed as storage and/or as memory may be implemented, for example, using a dual mode access scheme as described below.

In some embodiments, the visible memory and/or storage space 804A may be configured without a cache. In some embodiments, however, a portion of the memory media 802 may be configured as an invisible cache space 810 for the visible memory and/or storage space 804A. To prevent data loss (e.g., based on a power loss event), the persistency logic 816 may flush data in the invisible cache space 810 to a portion of the storage media 804 that may be configured as invisible persistence space 804C. Another portion of the storage media 804 may be configured as invisible endurance space for the visible memory and/or storage space 804A.

Because a portion of the memory and/or storage space 840 may be configured to be accessed as both memory and storage using different access mechanisms, in some embodiments, it may be beneficial to configure the memory as special-purpose memory. Depending on the implementation details, this may prevent an operating system from allocating memory, which may also be accessed as storage, as general memory.

In some embodiments, the memory and/or storage space 840 may be implemented primarily as a storage space, for example, by configuring the memory and/or storage space 840 as visible storage space by default. One or more portions of the memory and/or storage space 840 may additionally be configured as visible memory space (e.g., for dual mode access) on an as-needed basis, on an as-used basis, when requested by a user, and/or the like. In some embodiments, the memory and/or storage space 840 may be controlled by an NVMe driver, a file system, and/or the like, which may be referred to as an owner. For example, an owner may determine which of one or more portions of the memory and/or storage space 840 may be accessed by one or more specific users and for one or more specific amounts of time.

In some embodiments, an owner of a portion of the memory and/or storage space 840 may configure, operate, and/or the like, one or more additional caches (e.g., other than CPU caches), for example, in system memory (e.g., DRAM) at a host. In such an embodiment, the owner may implement a coherency scheme between one or more portions of memory and/or storage space 840 configured as memory and the one or more additional caches.

Some embodiments may implement one or more features for data consistency and/or coherency between data accessed as storage (e.g., using NVMe) and data accessed as memory (e.g., using CXL). For example, if a device is implemented with a memory buffer (e.g., as a CXL Type-3 device and/or using a CXL 2.0 protocol), a host (or an application, process, service, operating system, VM, VM manager, and/or the like, running on the host) may implement one or more schemes for data consistency and/or coherency for explicit CPU or accelerator cache flushes for one or more memory accesses and fence and/or barrier synchronization mechanisms.

In some embodiments, a device accessing a portion of the memory and/or storage space 840 as storage may perform one or more data consistency and/or coherency operations. For example, if a device is implemented with an accelerator (e.g., as a CXL Type-2 device and/or using a CXL 2.0 protocol), the device may be configured to issue an ownership request (e.g., using CXL.cache) based on a write to memory and/or storage space 840 as storage (e.g., an NVMe write). As another example, for a device using a memory access protocol with back-invalidation snoop capability (e.g., CXL 3.0) the device may be configured to use either a back-invalidation snoop (e.g., using CXL.cache and/or CXL.mem) based on a write to memory and/or storage space 840 as storage (e.g., an NVMe write).

Although the embodiment illustrated in Fig. 8 is not limited to any specific uses, applications, and/or the like, in one example use case, the device 800 may be used to implement memory mapped storage, for example, using a dual mode access scheme. Depending on the implementation details, such an embodiment may provide improved performance (e.g., lower latency) compared, for example, to a memory mapped storage scheme that may be implemented in an operating system such as mmap in Linux.

Any or all of the access logic 814, cache and/or prefetch logic 812, configuration logic 818, work logic 830, translation lookaside buffer 828, persistency logic 816, and/or the like, may be characterized and/or referred to, collectively and/or individually, as control logic.

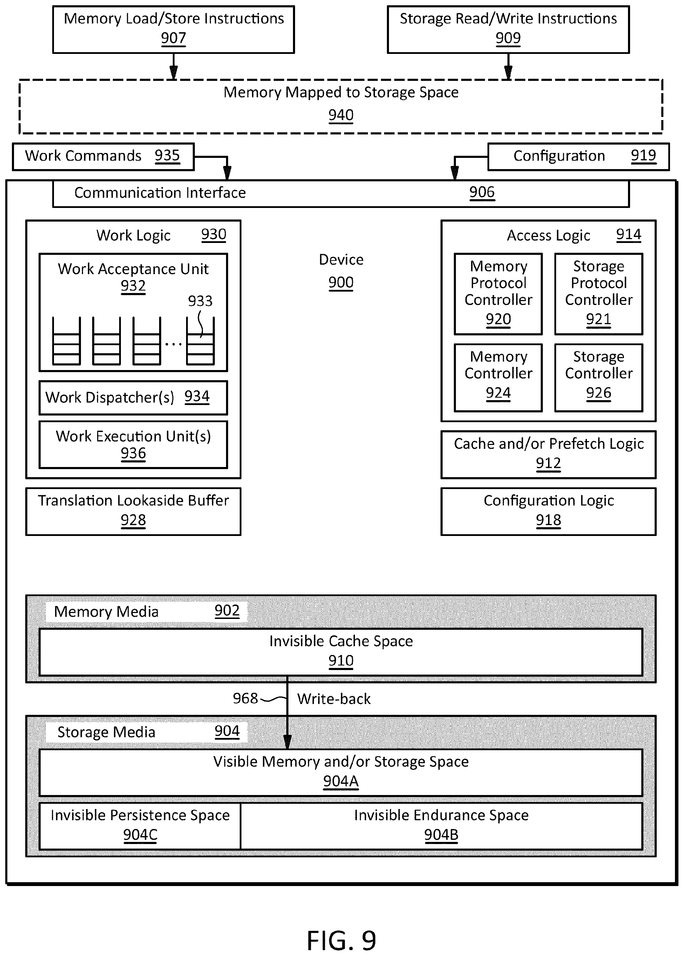

Fig. 9 illustrates a seventh example embodiment of a scheme for configuring and/or operating a device having memory media and storage media in accordance with example embodiments of the disclosure. The embodiment illustrated in Fig. 9 may be used to implement, and/or may be implemented with, for example, the device illustrated in Fig. 1 in which similar elements may be indicated by reference numbers ending in, and/or containing, the same digits, letters, and/or the like. The device 900 illustrated in Fig. 9 may include one or more elements similar to the embodiments illustrated in Fig. 3, Fig. 4, Fig. 5, Fig. 6, Fig. 7, and/or Fig. 8 in which similar elements may be indicated by reference numbers ending in, and/or containing, the same digits, letters, and/or the like.

In some aspects, the configuration and/or operation of the device 900 illustrated in Fig. 9 may be similar to the configuration and/or operation of the device 800 illustrated in Fig. 8. However, the embodiment illustrated in Fig. 9 may not include persistency logic and/or a persistency power source. Thus, the device 900 may provide a user with one or more commands such as a cache flush command (e.g., using the work logic 930) to enable the user to manage persistency of data in the invisible cache space 910. Such an embodiment may be used, for example, in an implementation in which an external power source is used to provide backup power to the device 900, and the user is aware of a power loss event.

In some embodiments, a dual mode access scheme may refer to an access scheme in which a portion of storage media may be accessed as memory using a memory access method and as storage using a storage access method.

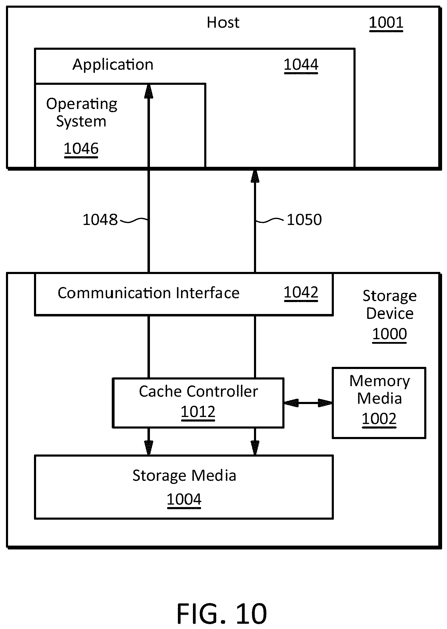

Fig. 10 illustrates an embodiment of a dual mode storage access scheme in accordance with example embodiments of the disclosure. The embodiment illustrated in Fig. 10 may include a host 1001 and a storage device 1000. The host 1001 may include one or more processors that may run an operating system 1046 and an application 1044.

The storage device 1000 may include memory media 1002 (e.g., DRAM), storage media 1004 (e.g., NAND flash), a communication interface 1042, and a cache controller 1012. In some embodiments, memory media 1002 may be addressable in relatively smaller units such as bytes, words, cache lines, and/or the like, whereas storage media 1004 may be addressable in relatively larger units such as pages, blocks, sectors, and/or the like. The storage device 1000 may be configured to enable the host to access the storage media 1004 as storage using a first data transfer mechanism 1048, or as memory using a second data transfer mechanism 1050. In one example embodiment, the communication interface 1042 may implement the first data transfer mechanism 1048 using CXL.io, and the second data transfer mechanism using CXL.mem. The configuration illustrated in Fig. 10 may enable the operating system (e.g., Linux) 1046 to access the storage media 1004 as storage, for example, using a file system based access scheme that supports an NVMe protocol running over CXL.io. For example, a file system in the operating system 1046 may access data in the storage media 1004 using NVMe read and/or write commands that may read data from, and/or write data to, the storage media 1004 in units of one or more pages.

The configuration illustrated in Fig. 10 may also enable the application 1044 to access the storage media 1004 as memory, for example, with memory load/store instructions using CXL.mem. In some embodiments, the cache controller 1012 may configure a portion of the memory media 1002 as a cache for the storage media 1004. For example, because memory load and/or store commands may access data in relatively smaller units such as bytes, words, cache lines, and/or the like, and because storage read and/or write commands may access the storage media 1004 in relatively larger units such as pages, blocks, sectors, and/or the like, the storage device 1000 may service a memory load command for data (e.g., a byte, word, cache line, and/or the like) in the storage media 1004 by reading a page, block, sector, and/or the like, containing the requested data from the storage media 1004 and storing the page, block, sector, and/or the like in a cache (e.g., in a portion of memory media 1002). The storage device 1000 may then extract the requested data from the cache and return it in response to the memory load command.

The embodiment illustrated in Fig. 10 may be used, for example, to implement a memory mapped storage scheme in accordance with example embodiments of the disclosure. Depending on the implementation details, such a scheme may improve performance (e.g., reduce latency) compared, for example, to a memory mapped file scheme implemented by an operating system. For example, an operating system such as Linux may implement a memory mapped file scheme in which, for an application running at a host to read, as memory, data in a file stored in storage media at a storage device, the operating system may read, as storage, a sector from the storage media using an NVMe protocol. The operating system may then store the sector in main memory (e.g. DRAM) from which the application may load the requested data.

However, in dual mode access scheme illustrated in Fig. 10, the operating system 1046 may be configured to enable the application 1044 to access, as memory, a file stored in the storage media 1004 relatively directly, for example, by bypassing one or more operations of the operating system 1046 and using the second data transfer mechanism 1050 (e.g., CXL). For instance, in an example storage access operation, the application 1044 may send a memory load command (e.g., using CXL which may bypass the operating system 1046) to the storage device 1000 to request a byte of data in the storage media 1004. If the requested byte of data is stored in a cache (e.g., in a portion of memory media 1002), the cache controller 1012 may read the requested data from the cache and return the requested data in response to the memory load command. However, even if the requested data is not stored in a cache, and the cache controller 1012 uses a storage read command to read a page containing the requested byte of data from the storage media 1004 (which may then be stored in a cache from which the memory load command may be serviced), the memory load command may still bypass the operating system 1046. Depending on the implementation details, this may reduce overhead, power consumption, latency, and/or the like, associated with an operating system transferring a sector to host memory. Using the second data transfer mechanism 1050 (e.g., CXL.mem) may also result in a faster data transfer compared, for example, to using a storage protocol such as NVMe running over a relatively slow PCIe or CXL.io transport scheme.

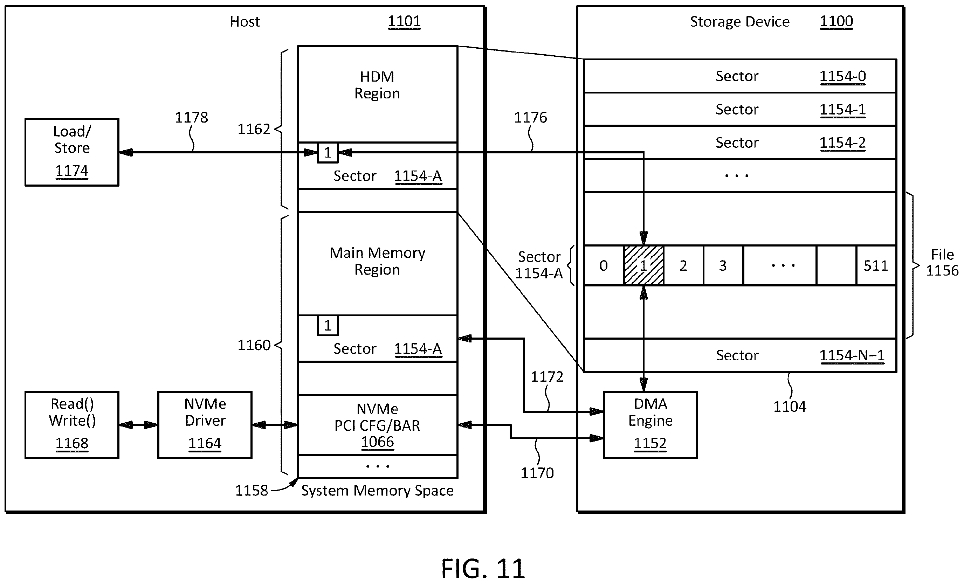

Fig. 11 illustrates another embodiment of a dual mode storage access scheme in accordance with example embodiments of the disclosure. For purposes of illustration, the embodiment illustrated in Fig. 11 may be described in the context of a storage device 1100 that may access data in units of sectors. However, other embodiments may access storage media in units of pages, blocks, and/or the like.

The embodiment illustrated in Fig. 11 may include a storage device 1100 having storage media 1104 and a DMA engine 1152. Data may be stored in the storage media 1104 as sectors 1154-0, 1154-1, ..., 1154-N-1 (which may be referred to collectively and/or individually as 1154). A sector may include, for example, 512 bytes numbered 0 through 511. A memory mapped file 1156 may be stored in one or more sectors 1154 including sector 1154-A which may include data of interest stored in byte 1.

A host 1101 may include a system memory space 1158 having a main memory region 1162 that may be implemented, for example, with dual inline memory modules (DIMMS) on a circuit board (e.g., a host motherboard). Some or all of the storage media 1104 may be mapped, using a memory access protocol such as CXL, as host managed device memory (HDM) 1162 to a region of the system memory space 1158.

The host 1101 (or an application, process, service, virtual machine (VM), VM manager, and/or the like, running on the host) may access data in the memory mapped file 1156 as storage using a first access mode (which may also be referred to as a method) or as memory using a second access mode.

The first mode may be implemented by an operating system running on the host 1101. The operating system may implement the first mode with a storage access protocol such as NVMe using an NVMe driver 1164 at the host 1101. The NVMe protocol may be implemented with an underlying transport scheme based, for example, on CXL.io which may use a PCIe physical layer. The NVMe driver 1164 may use a portion 1166 of system memory 1158 for PCIe configuration (PCI CFG), base address registers (BAR), and/or the like.

An application (or other user) may access data in the file 1156 in units of sectors (or blocks, pages, and/or the like) using one or more storage read/write instructions 1168. For example, to read the data stored in byte 1 in sector 1154-A of file 1156, an application (or other user) may issue, to the NVMe driver 1164, a storage read command 1168 for the sector 1154-A that includes byte 1. The NVMe driver 1164 may initiate a DMA transfer by the DMA engine 1152 as shown by arrow 1170. The DMA engine 1152 may transfer the sector 1154-A to the main memory region 1160 of system memory 1158 as shown by arrow 1172. The application may then access byte 1 by reading it from the main memory region 1160.

The second mode may be implemented with a memory access protocol such as CXL which may map the storage media 1104 as host managed device memory (HDM) 1162 to a region of the system memory space 1158. Thus, the sector 1154-A including byte 1 may be mapped to the HDM region 1162.

An application (or other user) may also access data in the file 1156 in units of bytes (or words, cache lines, and/or the like) using one or more memory load/store instructions 1174. For example, to read the data stored in byte 1 of the file 1156, an application (or other user) may issue a memory load command 1174. The data stored in byte 1 may be transferred to the application using, for example, the CXL.mem protocol as shown by arrows 1176 and 1178.

Depending on the implementation details, accessing the data stored in byte 1 of the file 1156 using the second mode (e.g., using CXL) may reduce latency (especially, in some embodiments, when accessing data in relatively small units), increase bandwidth, reduce power consumption, and/or the like, for any number of the following reasons. In a CXL scheme, a sector may be mapped, rather than copied to system memory, thereby reducing data transfers. In a CXL scheme, data may be byte addressable, thereby reducing the amount of data transferred to access the data of interest in byte 1 as compared to copying an entire sector to system memory. A CXL scheme may provide an application or other user may more direct access to data, for example, by bypassing some or all of an operating system as also illustrated in Fig. 10. As with the embodiment described above with respect to Fig. 10, in the embodiment illustrated in Fig. 11, data accessed in a sector 1154 using memory load/store instructions 1174 may be accessed using a cache that may be implemented with memory media that may be located, for example, in the storage device 1100, system memory space 1158, and/or the like. Such a cache configuration may be used, for example, because the sectors 1154 or other storage media in storage device may only be accessible in units of sectors, blocks, pages, and/or the like, whereas a memory load/store command 1174 may access data in units of bytes, words, cache lines, and/or the like.

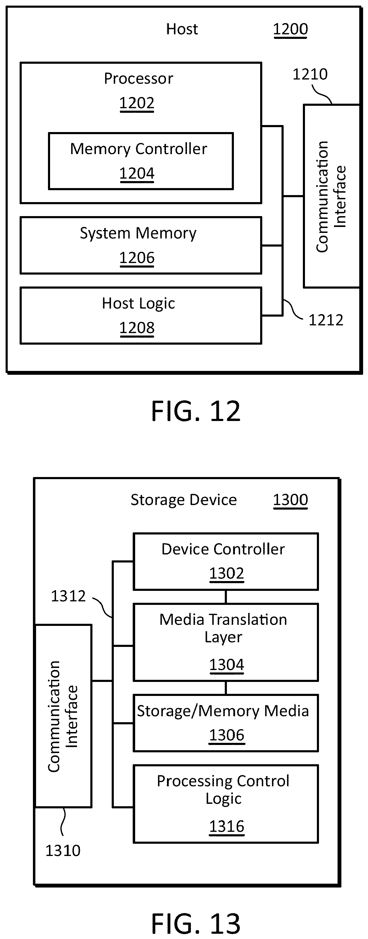

Fig. 12 illustrates an example embodiment of a host apparatus that may be used to implement any functionality of a host (or other user such as an application, process, service, operating system, VM, VM manager, and/or the like) disclosed herein in accordance with example embodiments of the disclosure. The host apparatus 1200 illustrated in Fig. 12 may include a processor 1202, which may include a memory controller 1204, a system memory 1206, host logic 1208, and/or a communication interface 1210. Any or all of the components illustrated in Fig. 12 may communicate through one or more system buses 1212. In some embodiments, one or more of the components illustrated in Fig. 12 may be implemented using other components. For example, in some embodiments, the host logic 1208 may be implemented by the processor 1202 executing instructions stored in the system memory 1206 or other memory. In some embodiments, the host logic 1208 may be used to implement any user functionality relating to configuring, operating, and/or the like, a device as disclosed herein. For example, the host logic 1208 may be used to send one or more commands to configure a device (e.g., using configuration logic), send one or more commands to perform a data movement operation, cache management operation, and/or the like, send one or more memory access requests, send one or more storage access requests, and/or the like.

Fig. 13 illustrates an example embodiment of a storage device that may be used to implement any of the device functionality disclosed herein that may be implemented with a storage device in accordance with example embodiments of the disclosure. The storage device 1300 may include a device controller 1302, a media translation layer 1304 (e.g., an FTL), storage and/or memory media 1306, processing control logic 1316, and a communication interface 1310. The components illustrated in Fig. 13 may communicate through one or more device buses 1312. In some embodiments that may use flash memory for some or all of the media 1306, the media translation layer 1304 may be implemented partially or entirely as a flash translation layer (FTL). In some embodiments, the processing control logic 1316 may be used to implement any of the control logic disclosed herein, for example, access control logic, cache logic, persistency logic, configuration logic, work logic, and/or the like.

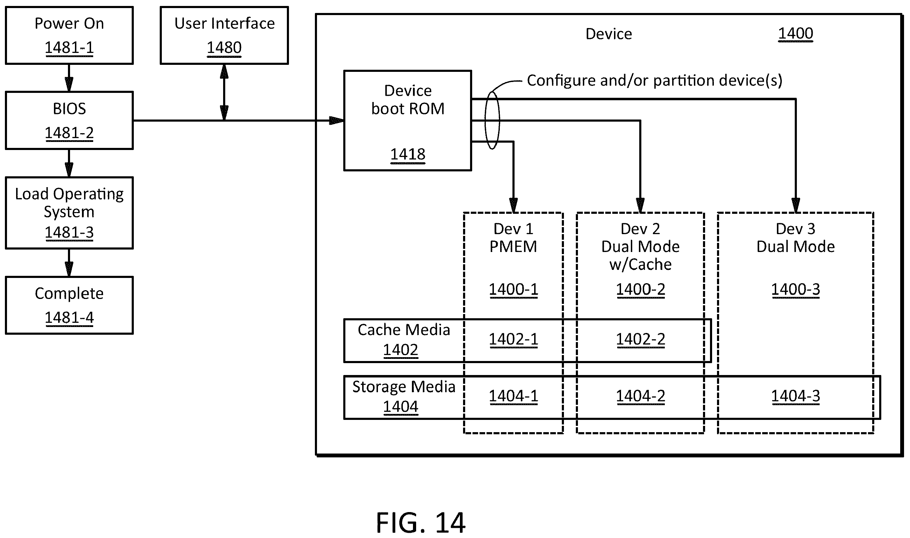

Fig. 14 illustrates a first example embodiment of a device configuration scheme in accordance with example embodiments of the disclosure. The embodiment illustrated in Fig. 14 may be used to implement, and/or may be implemented with, for example, any of the apparatus and/or schemes disclosed herein in which similar elements may be indicated by reference numbers ending in, and/or containing, the same digits, letters, and/or the like.

The embodiment illustrated in Fig. 14 may include a device 1400 that may include cache media 1402 and/or storage media 1404. The device 1400 may include configuration logic 1418 that may be implemented, as illustrated in Fig. 14 for example, with a device boot read only memory (ROM), e.g., a CXL device boot ROM. The device 1400 may be configured, for example, during a power on process (e.g., a power on self test (POST)) illustrated on the left side of Fig. 14. The power on process, which may be initiated, executed, and/or the like, for example, by a host or other user, may begin at operation 1481-1 at which power may be applied to the device 1400. At operation 1481-2, a host or other user may execute basic input and/or output service (BIOS) code that may load and/or execute the device boot ROM 1418, for example, by one or more processors or other circuits at the device 1400.

The device boot ROM 1418 may enable a user to configure the device 1400, for example, using a BIOS user interface (UI) 1480 (e.g., a configuration screen that may provide various menus, configuration settings, and/or the like). Based on one or more configuration parameters provided through the UI 1480, the device boot ROM 1418 may configure the cache media 1402 and/or storage media 1404 at the device 1400. Examples of configuration settings may include amounts, types, and/or the like of cache media 1402, storage media 1404, invisible cache space and/or visible memory space within cache media 1402, visible storage space, invisible persistency space, invisible endurance space, and/or the like within storage media 1404, one or more cache policies, and/or the like, for one or more virtual devices within the device 1400. For example, in some embodiments, the device boot ROM 1418 may configure the device 1400 to implement one or more virtual devices that may have various amounts of cache media 1402 and/or storage media 1404.

In the example embodiment illustrated in Fig. 14, the device boot ROM 1418 may configure a first virtual device 1400-1 as a first type of device (e.g., a PMEM device) that may include a first portion 1402-1 of cache media 1402 and/or a first portion 1404-1 of storage media 1404. The device boot ROM 1418 may also configure a second virtual device 1400-2 as a second type of device (e.g., a dual mode storage device with cache) that may include a second portion 1402-2 of cache media 1402 and/or a second portion 1404-2 of storage media 1404. The device boot ROM 1418 may further configure a third virtual device 1400-3 as a third type of device (e.g., a dual mode storage device)that may include a third portion 1404-3 of storage media 1404.

At operation 1481-3, based on a completion of at least a portion of the configuration operation, a host or other user, as well as the device 1400, may load and/or start one or more operating systems. At operation 1481-4, some or all of the configuration process may be completed, and the device 1400 may proceed to operate, for example, by processing access requests. In some embodiments, the configuration scheme illustrated in Fig. 14 may be characterized as a static scheme because, depending on the implementation details, one or more of the device and/or virtual devices may be configured using the boot ROM at power on (e.g., only at power on).

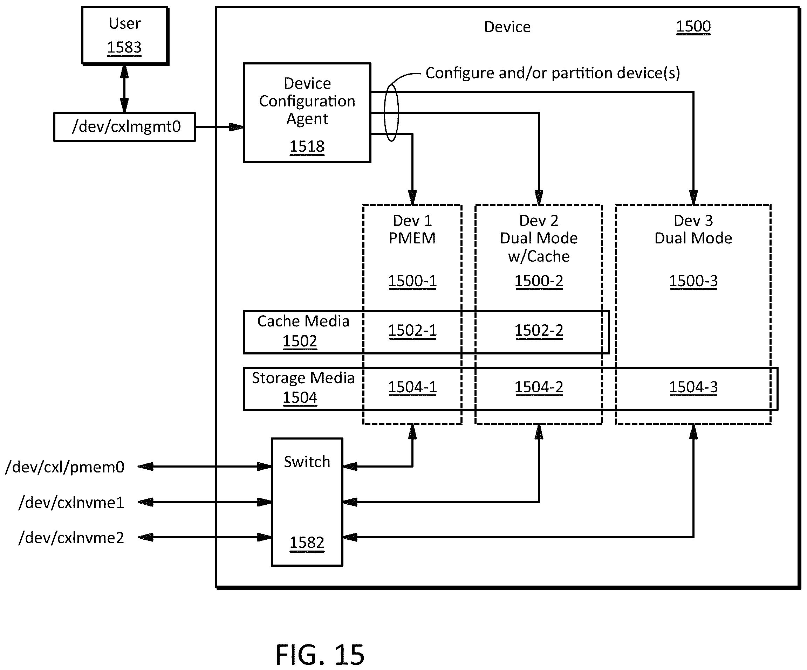

Fig. 15 illustrates a second example embodiment of a device configuration scheme in accordance with example embodiments of the disclosure. The embodiment illustrated in Fig. 15 may be used to implement, and/or may be implemented with, for example, any of the apparatus and/or schemes disclosed herein in which similar elements may be indicated by reference numbers ending in, and/or containing, the same digits, letters, and/or the like.

In the embodiment illustrated in Fig. 15, the configuration logic 1518 may be implemented, as illustrated in Fig. 15 for example, with a device configuration agent (e.g., a CXL device configuration agent). The device configuration agent 1518 may be accessed, for example as a device for an operating system (e.g., at a host or other user 1583) such as a file /dev/cxlmgmt0 that may be used to configure the device 1500. The device configuration agent 1518 may configure and/or partition the device 1500, as well as cache media 1502 and/or storage media 1504, to implement a physical device and/or one or more virtual devices such as virtual devices 1500-1, 1500-2, and/or 1500-3 which, for purposes of illustration, may be similar to those illustrated in Fig. 14, but may be implemented in any other configuration(s).

The embodiment illustrated in Fig. 15 may also include a physical and/or virtual switch 1582 (e.g., a virtual CXL switch) that may enable a host or other user 1583 to access one or more of the virtual devices 1500-1, 1500-2, and/or 1500-3. In this example embodiment, the virtual devices 1500-1, 1500-2, and/or 1500-3 may be configured as a PMEM device, a dual mode device with cache, and/or a dual mode device, respectively. Thus, in some embodiments, the virtual devices 1500-1, 1500-2, and/or 1500-3 may be accessed using an operating system as files /dev/cxl/pmem0, /dev/cxlnvmel, and/or /dev/cxlnvme2, respectively. The virtual devices Dev 1, Dev 2, and Dev 3 illustrated in Fig. 15 may be considered virtual in the sense of being mapped to different addresses. Thus, the virtual devices may be accessed by different virtual machines, for example, as different files (e.g., /dev/cxl/pmem0, /dev/cxlnvme1, and/or /dev/cxlnvme2) through an operating system that may run a hypervisor supporting the virtual machines.

In some embodiments, the configuration scheme illustrated in Fig. 15 may be characterized as a dynamic scheme because, depending on the implementation details, one or more of the device and/or virtual devices may be configured using the device configuration agent 1518 while the device is operating, for example, to implement features such as hot plug, hot unplug, and/or the like for the device 1500.

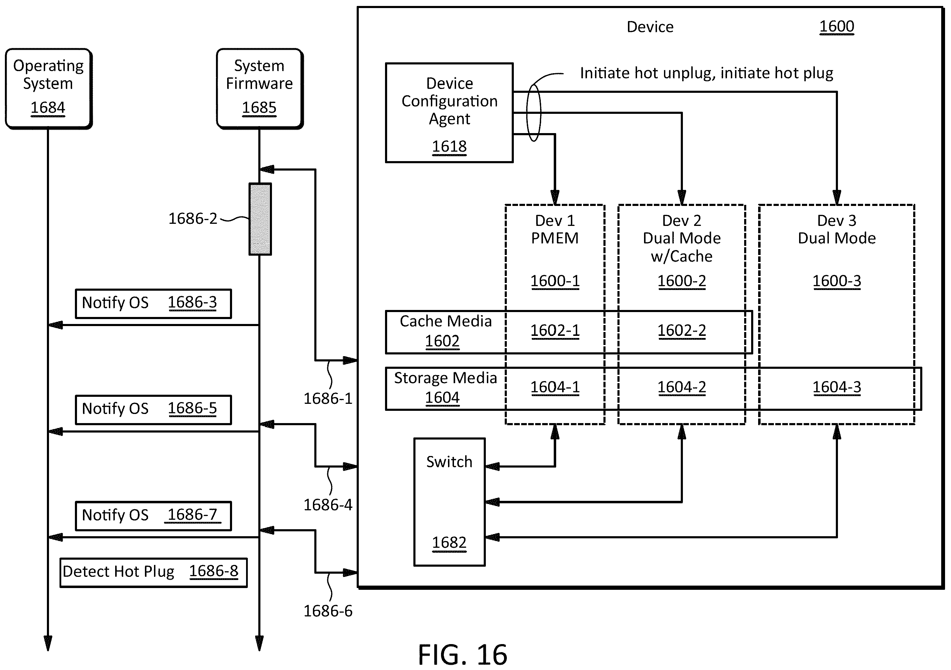

Fig. 16 illustrates an example embodiment of a device configuration scheme with hot plug functionality in accordance with example embodiments of the disclosure. The embodiment illustrated in Fig. 16 may be used to implement, and/or may be implemented with, for example, the scheme illustrated in Fig. 15 and/or any of the apparatus and/or schemes disclosed herein in which similar elements may be indicated by reference numbers ending in, and/or containing, the same digits, letters, and/or the like.

Referring to Fig. 16, an example hot plug process illustrated on the left side of Fig. 16 may involve an operating system (OS) 1684 and/or system firmware 1685 in which time may progress in a downward direction. A hot plug process may include an operation 1686-1 at which device Dev1 (e.g., a virtual device) may be configured and/or a hot plug process may be initiated, for example, by the device configuration agent 1618 based on detecting a hot plug of the device 1600. At operation 1686-2, system firmware 1685 may add the PMEM implemented by device Dev1 to an address space (e.g., a physical address space). At operation 1686-3, the system firmware 1685 may notify the operating system 1684 to install the device Dev1 which may be accessible, for example, as a file /dev/cxl/pmem0.

At operation 1686-4, the device configuration agent 1618 may configure device Dev2 (e.g., a virtual device). At operation 1686-5, the system firmware 1685 may notify the operating system 1684 to install the device Dev2 which may be accessible, for example, as a file /dev/cxlnvme1. At operation 1686-6, the device configuration agent 1618 may configure device Dev3 (e.g., a virtual device). At operation 1686-7, the system firmware 1685 may notify the operating system 1684 to install the device Dev3 which may be accessible, for example, as a file /dev/cxlnvme2. At operation 1686-8, the hot plug detection and/or configuration process may be completed, and the devices may proceed to process access requests, for example, from the operating system 1684, host, and/or other user.

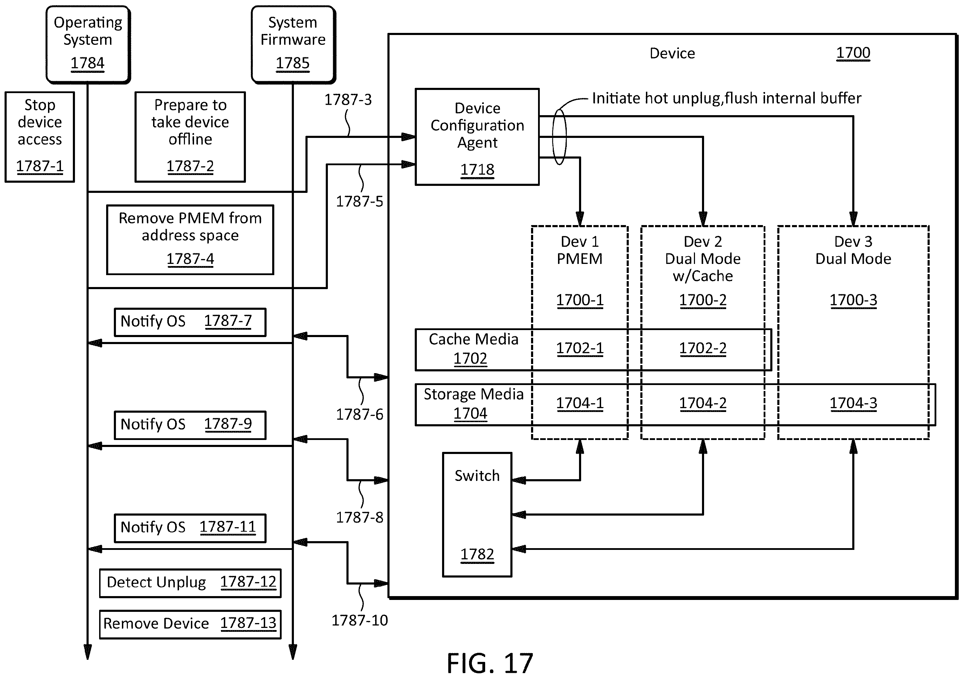

Fig. 17 illustrates an example embodiment of a device configuration scheme with hot unplug functionality in accordance with example embodiments of the disclosure. The embodiment illustrated in Fig. 17 may be used to implement, and/or may be implemented with, for example, the scheme illustrated in Fig. 15 and/or any of the apparatus and/or schemes disclosed herein in which similar elements may be indicated by reference numbers ending in, and/or containing, the same digits, letters, and/or the like.

Referring to Fig. 17, an example hot unplug process illustrated on the left side of Fig. 17 may involve an operating system 1784 and/or system firmware 1785 in which time may progress in a downward direction. A hot unplug process may include an operation 1787-1 at which the operating system 1784 may stop one or more (e.g., all) accesses of the device 1700. At operation 1787-2, preparations to take the device 1700 offline may include, for example, closing one or more files, synchronizing one or more buffers, flushing one or more CPU caches, flushing one or more device buffers, and/or the like.

At operation 1787-3, the operating system 1784 may notify the device configuration agent 1718 to initiate a hot unplug process, for example, by flushing one or more internal buffers. At operation 1787-4, the operating system 1784 and/or firmware 1785 may remove one or more portions of memory (e.g., PMEM) associated with the device 1700 from an address space (e.g., a physical address space). At operation 1787-5, the operating system 1784 and/or firmware 1785 may send a request to the device configuration agent 1718 to take the device 1700 offline.

At operation 1787-6, the device configuration agent 1718 may remove device Dev1. At operation 1787-7, the system firmware 1785 may notify the operating system 1784 that device Dev1 has been removed. At operation 1787-8, the device configuration agent 1718 may remove device Dev2. At operation 1787-9, the system firmware 1785 may notify the operating system 1784 that device Dev2 has been removed. At operation 1787-10, the device configuration agent 1718 may remove device Dev3. At operation 1787-11, the system firmware 1785 may notify the operating system 1784 that device Dev3 has been removed. At operation 1787-12, the hot unplug event may be detected, and the device 1700 may be powered down. At operation 1787-13, the device 1700 may be removed, for example, from a slot, chassis, rack, and/or the like.

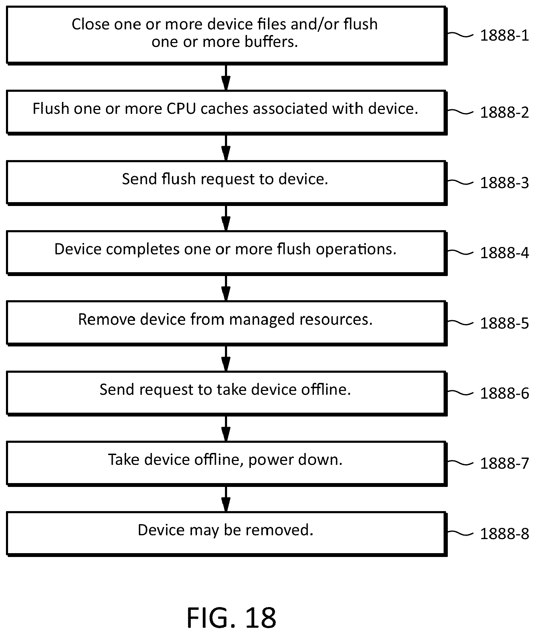

Fig. 18 illustrates an example embodiment of a hot unplug method for a device in accordance with example embodiments of the disclosure. The embodiment illustrated in Fig. 18 may be used to implement, and/or may be implemented with, for example, the scheme illustrated in Fig. 15, Fig. 17, and/or any of the apparatus and/or schemes disclosed herein in which similar elements may be indicated by reference numbers ending in, and/or containing, the same digits, letters, and/or the like. For purposes of illustration, the method illustrated in Fig. 18 may be described in the context of being implemented with the device 1700 illustrated in Fig. 17, but the method illustrated in Fig. 18 is not limited to the details illustrated in Fig. 17.

Referring to Fig. 18, the method may begin at operation 1888-1 at which an operating system 1784 may close one or more device files and/or flush one or more buffers associated with the device 1700 being hot unplugged. At operation 1888-2, the operating system 1784, system firmware 1785, and/or the like may flush one or more CPU caches associated with the device 1700 (and/or one or more virtual devices 1700-1, 1700-2, and/or 1700-3 implemented with the device 1700). At operation 1888-3, the operating system 1784, system firmware 1785, and/or the like may send a flush request to the device 1700, for example, to flush one or more caches, buffers, and/or the like associated with the device 1700 (and/or one or more virtual devices 1700-1, 1700-2, and/or 1700-3). At operation 1888-4, the device 1700 may complete one or more flush operations requested at operation 1888-3.

At operation 1888-5, the operating system 1784, system firmware 1785, and/or the like may remove the device 1700 (and/or one or more virtual devices 1700-1, 1700-2, and/or 1700-3) from managed resources, for example, to prevent the use of, and/or allocation of resources to, the device 1700. At operation 1888-6, the operating system 1784, system firmware 1785, and/or the like may send a request to the device 1700 to take the device offline. At operation 1888-7, the device 1700 may be taken offline and/or powered down. At operation 1888-8, the device 1700 may be removed, for example, from a slot, chassis, rack, and/or the like.

Any of the functionality described herein, including any of the user functionality, device functionally, and/or the like (e.g., any of the control logic) may be implemented with hardware, software, firmware, or any combination thereof including, for example, hardware and/or software combinational logic, sequential logic, timers, counters, registers, state machines, volatile memories such DRAM and/or SRAM, nonvolatile memory including flash memory, persistent memory such as cross-gridded nonvolatile memory, memory with bulk resistance change, PCM, and/or the like and/or any combination thereof, complex programmable logic devices (CPLDs), field programmable gate arrays (FPGAs), application specific circuits (ASICs), central processing units (CPUs) including CISC processors such as x86 processors and/or RISC processors such as ARM processors, graphics processing units (GPUs), neural processing units (NPUs), tensor processing units (TPUs), data processing units (DPUs), and/or the like, executing instructions stored in any type of memory. In some embodiments, one or more components may be implemented as a system-on-chip (SOC).

Some embodiments disclosed above have been described in the context of various implementation details, but the principles of this disclosure are not limited to these or any other specific details. For example, some functionality has been described as being implemented by certain components, but in other embodiments, the functionality may be distributed between different systems and components in different locations and having various user interfaces. Certain embodiments have been described as having specific processes, operations, etc., but these terms also encompass embodiments in which a specific process, operation, etc. may be implemented with multiple processes, operations, etc., or in which multiple processes, operations, etc. may be integrated into a single process, step, etc. A reference to a component or element may refer to only a portion of the component or element. For example, a reference to a block may refer to the entire block or one or more subblocks. The use of terms such as "first" and "second" in this disclosure and the claims may only be for purposes of distinguishing the elements they modify and may not indicate any spatial or temporal order unless apparent otherwise from context. In some embodiments, a reference to an element may refer to at least a portion of the element, for example, "based on" may refer to "based at least in part on," and/or the like. A reference to a first element may not imply the existence of a second element. The principles disclosed herein have independent utility and may be embodied individually, and not every embodiment may utilize every principle. However, the principles may also be embodied in various combinations, some of which may amplify the benefits of the individual principles in a synergistic manner. The various details and embodiments described above may be combined to produce additional embodiments according to the inventive principles of this patent disclosure.

In some embodiments, a portion of an element may refer to less than, or all of, the element. A first portion of an element and a second portion of the element may refer to the same portions of the element. A first portion of an element and a second portion of the element may overlap (e.g., a portion of the first portion may be the same as a portion of the second portion).

Since the inventive principles of this patent disclosure may be modified in arrangement and detail without departing from the inventive concepts, such changes and modifications are considered to fall within the scope of the following claims.

## Claims

1. A device comprising:
a cache media;
a storage media;
a communication interface; and
at least one control circuit configured to:
receive, using the communication interface, a first memory access request to access a portion of the storage media;
receive, using the communication interface, a second memory access request to access the portion of the storage media;
access, based on the first memory access request, the portion of the storage media; and
access, based on the second memory access request, a portion of the cache media.

2. The device of claim 1, wherein:
the portion of the cache media comprises a first cache; and
the at least one control circuit is configured to access, based on the first memory access request, the portion of the storage media by:
reading data from the portion of the storage media;
storing the data in a second cache; and
loading at least a portion of the data from the second cache.

3. The device of claim 1 or 2, wherein the at least one control circuit is configured to write at least a portion of the portion of the cache media to the portion of the storage media.

4. The device of any one of claims 1 to 3, wherein:
the portion of the storage media is a first portion of the storage media; and
the at least one control circuit is configured to:
receive, using the communication interface, a storage access request to access a second portion of the storage media; and
access, based on the storage access request, the second portion of the storage media.

5. The device of claim 4, wherein the at least one control circuit is configured to:
receive the first memory access request using a first protocol; and
receive the storage access request using a second protocol.

6. The device of claim 4 or 5, wherein the at least one control circuit is configured to:
operate the portion of the cache media and the first portion of the storage media as a first logical device; and
operate the second portion of the storage media as a second logical device.

7. The device of any one of claims 1 to 3, wherein the at least one control circuit is configured to:
receive, using the communication interface, a storage access request to access the portion of the storage media; and
access, based on the storage access request, the portion of the storage media.

8. The device of claim 7, wherein the at least one control circuit is configured to:
receive the first memory access request using a first protocol; and
receive the storage access request using a second protocol.

9. The device of claim 8, wherein:
the first protocol comprises a memory access protocol; and
the second protocol comprises a storage access protocol.

10. The device of any one of claims 7 to 9, wherein the at least one control circuit is configured to perform a coherency operation associated with the portion of the storage media.

11. The device of any one of claims 1 to 3, wherein:
the portion of the storage media is a first portion of the storage media; and
the at least one control circuit is configured to write at least a portion of the portion of the cache media to a second portion of the storage media.

12. The device of any one of claims 1 to 11, wherein the at least one control circuit comprises work logic configured to:
receive a command; and
perform, based on the command, a data movement operation or an operation associated with the portion of the cache media.

13. A device comprising:
a memory media;
a storage media;
a communication interface; and
at least one control circuit configured to:
receive, using the communication interface, a memory access request to access a portion of the memory media;
access, based on the memory access request, the portion of the storage media; and
write the portion of the memory media to a portion of the storage media.

14. The device of claim 13, wherein:
the portion of the storage media is a first portion of the storage media; and
the at least one control circuit is configured to:
receive, using the communication interface, a storage access request to access a second portion of the storage media; and
access, based on the storage access request, the second portion of the storage media.

15. The device of claim 14, wherein the at least one control circuit is configured to:
operate the portion of the memory media and the first portion of the storage media as a first logical device; and
operate the second portion of the storage media as a second logical device.
